# EUROPEAN PATENT SPECIFICATION

(11) **EP 4 313 354 B1**
(45) Date of publication and mention of the grant of the patent: **12.03.2025**
(21) Application number: 22727025.3
(22) Date of filing: 29.04.2022
(51) Int. Cl.: B01D 29/11, B01D 29/64, B01D 29/66, B01D 29/68, B01D 29/94, D06F 39/10

(54) **CYLINDRICAL FILTER WITH BACKWASHING NOZZLE**
ZYLINDRISCHER FILTER MIT RÜCKSPÜLDÜSE
FILTRE CYLINDRIQUE AVEC BUSE DE RÉTROLAVAGE

(30) Priority: 30.04.2021 GB 202106260; 12.11.2021 GB 202116312
(43) Date of publication of application: 07.02.2024
(73) Proprietor: INHERITING EARTH LIMITED, Bristol BS2 0XA (GB)
(72) Inventor: LAWRANCE-OWEN, Michael, Bristol Bristol BS2 0XA (GB); D'ORTON GIBSON, Reuben, Bristol Bristol BS2 0XA (GB); KETTLE AIERS, Reuben, Bristol Bristol BS2 0XA (GB); FEENEY, Fergal, Bristol Bristol BS2 0XA (GB); ROOT, Adam, Bristol Bristol BS2 0XA (GB)
(74) Representative: Williams, Ben
(86) International application number: PCT/EP2022/061489
(87) International publication number: WO 2022/229388

(56) References cited:
- WO-A1-2012/073247
- WO-A1-2021/070103
- DE-A1- 102017 001 968
- GB-A- 991 305
- US-A1- 2016 214 039
- US-A1- 2017 072 343

## Description

### BACKGROUND

### Field of the Invention

The invention relates to preventing microplastics from entering the environment. In particular the invention is directed to regenerating the pressure consumption of filters for removing microplastics in effluent from any source but in particular removing microfibers from washing machine wastewater.

### Description of Related Art

Microfibres are the most abundant form of microplastic pollution in rivers and oceans. Due to their microscopic scale, microfibers are eaten by organisms at all levels of the food chain, from plankton to top predators. Once ingested, plastics reduce feeding efficiency (false satiation) they may damage the gut of the animal and transfer harmful additives like PCBs, pesticides, flame retardants to the animal that consumed it. Plastics consumed by animals low in the food chain also impact their predators, which consume numerous contaminated prey daily. The pervasiveness of microfibers in the food chain has naturally resulted in concern regarding their transfer to humans, and contamination has been observed in crustaceans, molluscs and fish species destined for human consumption.

Unlike microbeads, which are easily excluded from toiletries and cleaning products, microfibres are formed through damage to clothing. One third of all microplastics in the oceans come from washing of synthetic textiles. Synthetic fabrics derived from petrochemicals make up 65% of all textiles. Wear and tear caused by abrasive forces in washing machines result in the fragmentation of man-made textiles, forming hundreds of thousands of microfibres, less than 5 mm in length, which leak from homes and drainage networks into the ocean.

The vast impact of microplastics on marine ecosystems is starting to be understood. A 2019 study published in the 'Science of the Total Environment' journal found 49% of 150 fish samples from the North East Atlantic Ocean contained microplastics with evidence of this causing harm to brain, gills, and dorsal muscles. These microplastics are also passed onto people consuming fish at a rate of between 518-3078 microplastic items/year/capita.

The impact is not just being seen in fish stocks but also algae, the building blocks of life. A 2015 study published in the 'Aquatic Toxicology' journal demonstrated high concentrations of polystyrene particles reduced algal growth up to 45%. This should be of concern as microalgae are one of the world's largest producers of oxygen on this planet.

Wastewater treatment plants cannot remove the millions of fibres that pass through them every day. Currently, secondary level water treatment removes around 98% of the microplastics that pass through them. However, the small proportion that escapes still equates to tens of millions of fibres per treatment works per day.

Furthermore, wastewater treatment plants produce a "sewage sludge" and plastic microfibers are found on discharge when released into the natural environment when the sludge is spread on agricultural land, thus microfibers make their way into the food chain, waste to energy (which can destroy fibres but release harmful gasses) or discharged into rivers or the ocean.

Solutions are being developed to capture microfibers produced in domestic washing machines by filtering the effluent from these machines. GB 991 305 A, US 2016/214039 A1, WO 2012/073247 A1, US 2017/072343 A1, DE 10 2017 001968 A1 and WO 2021/070103 A1 show different separation devices.

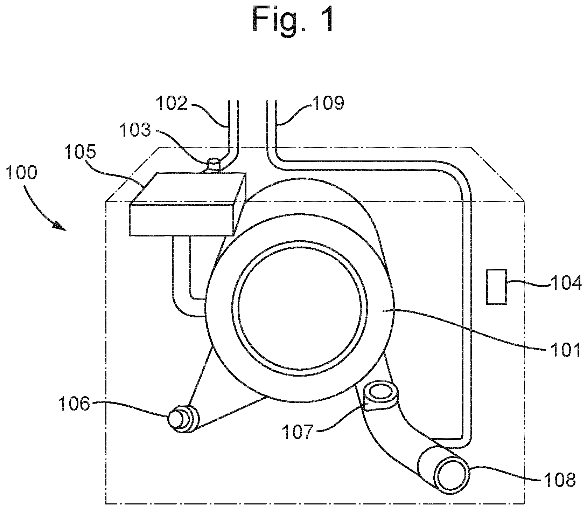

A typical front-loading domestic washing machine is shown in Figure 1 in schematic form. The machine 100 includes a rotatable sealed drum unit 101 for receiving garments to be washed. The drum unit 101 has a perforated cylindrical rotatable drum mounted inside a static waterproof shroud. Clean water is fed into the drum 101 via a cold water or hot water inlet 102 connected to mains and under mains pressure of typically 1-5 bar. The water entering the drum 101 is managed by an electronic valve, under the control of a CPU 104. The inlet 102 is connected to a drawer 105 where liquid or powdered detergent can be added by a user. The drawer has an outlet that leads to the drum unit 101. The drum unit may include a heater under the control of the CPU to heat the water to the desired wash temperature, typically up to 90 degrees Celsius. The drum is rotatable by an electric motor 106 under the control of the CPU 104 at speeds of typically from 5 to 1600 rpm. The drum unit can be emptied via a drain pump 108 controlled by the CPU. The drain pump is rated with a given power to produce a known pressure at its output. The drain pump feeds into an outlet 109 which is connected to the household or industrial drain and eventually the wastewater network.

A typical top-loading machine will have the axis of the drum vertical but will otherwise share many of the features of the front-loading machine.

In use, dirty laundry is placed in the drum, and a wash cycle initiated by a user. The CPU allows cold water to flow via the drawer to mix with detergent and then on into the drum, where the water is heated. The combined water, detergent and laundry is agitated by rotating the drum. During this process, dirt and grease is released into the water and fibres from the clothing too. If the clothing is synthetic, microfibers are typically released as the clothes rub against each other. The resulting effluent at the end of the wash cycle is a mixture of debris, dirt, grease and microfibers and potentially large objects such as coins or nails left in the clothing. This effluent is then drained and pumped out of the drum at a typical rate of 3-8 gallons per minute. Second or third rinse cycles with clean water may be performed, resulting in effluent with less concentrated contaminants. The drain rate of the washing machine is impacted by the level of water in the drum, the height of the outlet point and if a filter is connected to the outlet.

Current washing machine filters are designed to stop pennies and buttons breaking the washing machine pump. These filters often have open aperture of 7-14mm which is too large to effectively capture large amounts of microfibers. The filtration required to stop microfibres is typically less than 400 micrometers (um). Reducing the aperture size will remove a larger proportion of the fibers in the water.

It is known to provide mesh filters that stop the problem at source. However, mesh filters clog up quickly and when this happens their effectiveness drops off considerably. This causes the pressure to rise and the flow rate to reduce, which can lead to damage to pumps and delays to the wash cycle..

In a typical wash, the highest concentration of microfibers is in the range 5mm to 50 um but shorter microfibers exist that are still harmful in the environment. If it were required to remove 99% of microfibers of all sizes down to 50um in length, a mesh with apertures of 25um would theoretically be able to achieve this. In practice however, such a mesh placed directly in the stream of effluent will clog almost immediately and the filter will become inoperable. This will create a rise in pressure consumption in the outlet and potentially damage the pump.

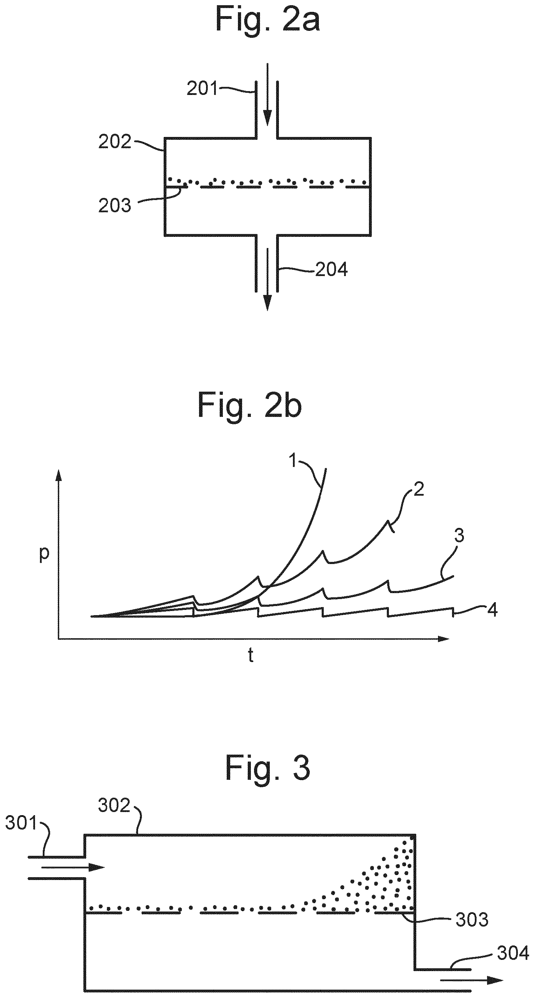

A conventional separator or filter arrangement is shown in Figure 2a. An inlet 201 directs effluent into a filter housing 202, within which a sieve structure 203 is supported. The sieve structure could be a mesh or other perforated material where the mesh opening size is selected to trap particles of a required dimension. Filtered effluent passes through the sieve structure 203 to an outlet 204. The filtered waste accumulates on what is called the unfiltered side of the sieve structure, while the outlet side of the sieve structure is called the filtered side. Filter efficacy is its effectiveness at removing debris of a given size range while maintaining an acceptable flow rate and is closely related to the filter's pressure consumption. The sieve structure shown in Figure 2a will become blinded over by filtered debris rapidly, so that its pressure consumption will increase.

In use, as the effluent fills the chamber, particles are filtered out and remain stuck to the outside of the mesh, increasing the power consumption of the filter as the mesh starts to clog.

Curve 1 in Figure 2b is a measure of the effectiveness of the arrangement shown in Figure 2a, given a constant flow of dirty water, with a consistent contamination level. The y-axis represents the fluid pressure, P, at the inlet 201 and it can be seen to rise gradually, then exponentially as the mesh becomes blinded over with filtrate.

In practice, the flow of effluent from a washing machine is not constant over time because a limited amount of water is used in each wash cycle. Curve 2 in Figure 2b shows how the inlet pressure varies over time where the flow of effluent stops, drains through the device and then starts again. Reductions in the pressure can be seen, as the flow stops and debris previously held against the mesh by the pressure of the flow falls away, revealing pores that allow fluid to flow through again, until they become re-blocked in the next cycle. Curve 2 demonstrates that the pressure consumption required by the conventional device increases through use, so the inlet pressure required to filter effluent eventually becomes greater than the pump is able to provide.

It is necessary to open this device and clean the mesh by hand to return its pressure consumption back to a level for it to operate effectively, i.e. to regenerate its pressure consumption. This is a tedious and messy process. For some filter types, regeneration is not possible, for example if the filter is a cartridge type filter. These filters require the user to remove and replace them regularly which provides a worse user experience and results in wastage from consumable parts. The present invention therefore seeks to overcome the problem of effectively regenerating the pressure consumption of mesh filters used for separating microplastics from a flow of effluent.

Figure 3 shows an alternative arrangement where the effluent inlet 301 is located at one end of a channel 302, where the sieve structure 303 forms a wall of the channel 302. In this way the incoming effluent will urge the filtered waste towards the other end of the channel. The sieve structure will not blind over as quickly as that shown in Figure 2a, but the pressure consumption will increase until the filtering action ceases. It is therefore an object of the invention to regenerate the pressure consumption of a microplastic separator unit.

### SUMMARY OF THE INVENTION

In an embodiment, a separator for separating solid material, including microplastics, from a fluid such as effluent is provided, the separator comprising: a chamber with an inlet and an outlet, a sieve structure forming a permeable barrier between the inlet and the outlet to filter the fluid, the sieve structure thus having an inlet side for unfiltered fluid and an outlet side for filtered fluid, the separator further comprising a filter pressure regeneration apparatus for dislodging filtered material from the sieve structure, wherein the filter pressure regeneration apparatus comprises a conduit and a nozzle assembly having at least one cleaning nozzle for directing cleaning fluid towards the outlet side of the sieve structure to dislodge filtered material from the inlet side of the sieve structure, the chamber including a channel formed of the chamber wall and the sieve structure and wherein the inlet may be located at an end of the channel such that in use the fluid flows through the channel and the material dislodged by cleaning fluid from the cleaning nozzle may be swept towards the other end of the channel away from the inlet by the movement of the fluid and wherein the sieve structure is has a circular cross-section and is located within the chamber and wherein the inlet is arranged to direct fluid tangentially into the chamber onto the sieve structure and a wall is provided to one side of the inlet such that the fluid is guided circumferentially around the sieve structure through the channel such that filtered material dislodged by the cleaning fluid from the cleaning nozzle is swept around the chamber by the flow of the fluid and accumulates on the side of the wall away from the inlet. The advantage of this arrangement, whereby filtered solid materials progress along a channel, is the better use of space, increased solid material collection capacity and ease of handling filtered solids. The description herein is directed towards filtering microplastics from effluent, but the separator may be applied to separate any solid material from any fluid.

A trap may be provided comprising an opening in the base of the channel to a sub-chamber, where the accumulating filtered material can be collected.

The nozzle assembly may comprise a plurality of cleaning nozzles that are rotatable around the central axis of the sieve structure.

The cleaning nozzles may be arranged opposite to each other and mounted on a central feed tube.

The nozzle assembly may be rotated by a motor.

The nozzle assembly may be rotated by propulsion nozzles that are arranged to direct a stream of fluid. The nozzles may be arranged off-centre from the central axis to provide propulsion or have a vector that is tangential to the circumference of the sieve structure.

The cleaning nozzles may be arranged to direct cleaning fluid perpendicularly against the sieve structure.

The cleaning nozzles may be arranged in a helix around the central feed tube.

The chamber may have a closed top and bottom.

A pump may be provided in fluid communication with the outlet of the chamber.

The pump may be a water pump arranged to drain the separator.

The pump may be arranged to recirculate the filtered fluid to the conduit of the filter pressure regeneration apparatus.

A second pump may be arranged to recirculate the filtered fluid to the conduit of the filter pressure regeneration apparatus.

The separator further may comprise an air pump located between the pump and the filter pressure regeneration apparatus to introduce air into the conduit and to drain the separator.

A fluid detector may be provided, and wherein the filter pressure regeneration apparatus may be arranged to be activated in accordance with the output from the fluid detector.

A reservoir may be provided below the chamber and the fluid detector may be located in the reservoir. The fluid detector may also be located at the conduit that feeds the inlet to the filter, the outlet to the filter or where a bypass conduit may be located. Some detector types, such as a pressure differential sensor may use multiple locations to provide differential measurements whereas others may only require a single location.

In some embodiments it may be advantageous to use multiple sensing options to provide a higher level of intelligence to the system.

The fluid detector may be a float switch, a capacitive sensor, an ultrasonic senor, an optical detector, a pressure differential sensor, or a pressure sensor.

A bypass conduit may be provided between the inlet and the outlet to provide an alternative route for fluid in the event that the flow of fluid through the filter chamber is impeded.

The bypass conduit may include a pressure-activated valve.

The nozzle assembly may comprise a nozzle arranged to direct a stream of fluid towards a rotatable body, wherein the body is arranged to rotate under the force of the stream of fluid and to project the fluid outwards towards the sieve structure.

In an embodiment, a washing machine has a separator of the type described above.

In an embodiment, a method of operating a separator of the type described above is provided, comprising the steps of; filtering fluid through a sieve structure, cleaning the filtered side of the sieve structure with a jet or jets of fluid from a nozzle or nozzles to clean accumulated debris from the unfiltered side of the sieve structure and regenerate the pressure consumption of the separator.

The method may include the further step of sweeping the nozzle or nozzles across the filtered side of the sieve structure.

### BRIEF DESCRIPTION OF THE DRAWINGS

Figure 1 shows a typical domestic washing machine.
Figure 2a shows a conventional separator.
Figure 2b is a graph showing the efficacy of different types of filter assembly.
Figure 3 shows a cross section of a conventional filter assembly.
Figure 4 shows a cross section of an embodiment having a single nozzle for regenerating the pressure consumption of the filter.
Figure 5 shows a cross section of an embodiment having an array of nozzles for regenerating the pressure consumption of the filter.
Figure 6a shows an embodiment having a cylindrical sieve structure and an array of fixed cleaning nozzles.
Figure 6b shows another view of the embodiment of 6a.
Figure 7a shows an embodiment having rotating cleaning nozzles.
Figure 7b shows a detailed view of waste material being ejected from the unfiltered side of the sieve structure by spraying with a jet of fluid from the filtered side of the sieve structure.
Figure 7c shows a detailed view of a water pellet being ejected from a nozzle.
Figure 8a shows an alternative arrangement of cleaning nozzles.
Figure 8b shows an alternative arrangement of cleaning nozzles.
Figure 9a shows an alternative arrangement of cleaning nozzles.
Figure 9b shows an alternative arrangement of cleaning nozzles.
Figure 10a shows a propulsion nozzle assembly.
Figure 10b shows a propulsion nozzle assembly in action.
Figure 11a shows a perspective view of an embodiment of a separator.
Figure 11b shows a cross sectional view of an embodiment of a separator.
Figure 11c shows a cross sectional view of an embodiment of a separator.
Figure 11d shows a cross sectional view of an embodiment of a separator.
Figure 12 shows a cross sectional view of an embodiment of a separator having a recirculation pump for recirculating filtered effluent as wash fluid.
Figure 13a shows a cross sectional view of an embodiment of a separator having a combined recirculation and drain pump for recirculating filtered effluent as wash fluid and for draining the separator.
Figure 13b shows an alternative arrangement of pump and conduits.
Figures 14a and 14b are views of different mesh heights.
Figures 15a and 15b are views of different filter chamber diameters.
Figure 16 is a cross-sectional view of a filter chamber with a flap.
Figure 17 is a cross-sectional view of a filter chamber with a restriction.
Figure 18 is a cross sectional view of a filter chamber with a directly driven nozzle assembly.
Figure 19a is a perspective view of a nozzle assembly having a slot.
Figure 19b is a perspective view of a nozzle assembly having a slot and only a single arm.
Figure 20a is a perspective view of a filter assembly having fixed nozzles and a rotating mesh.
Figure 20b is a perspective view of a filter assembly having rotating nozzles on the outside of the sieve structure.
Figure 20c is a perspective view of a filter assembly having a nozzle assembly with a rotatable plate.
Figure 21a is a perspective view of an embodiment of a separator unit.
Figure 21b is a perspective view of the embodiment of Figure 21a with the jug removed.

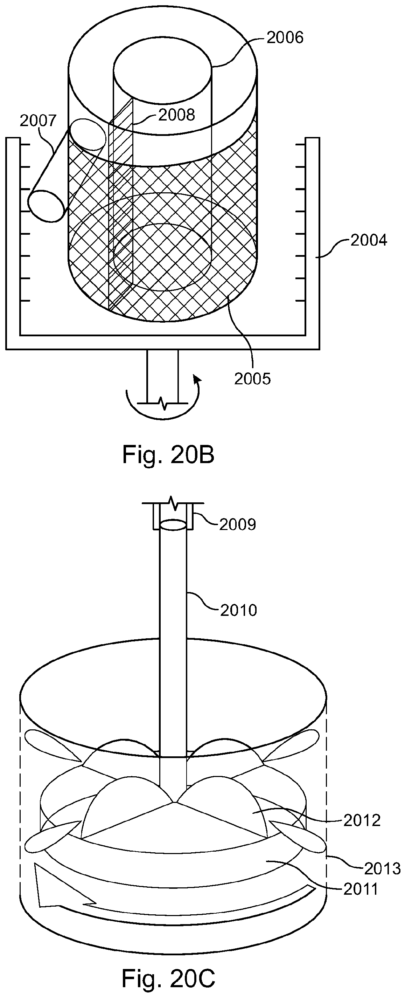

Figure 20c is a view of an embodiment with a rotating plate.

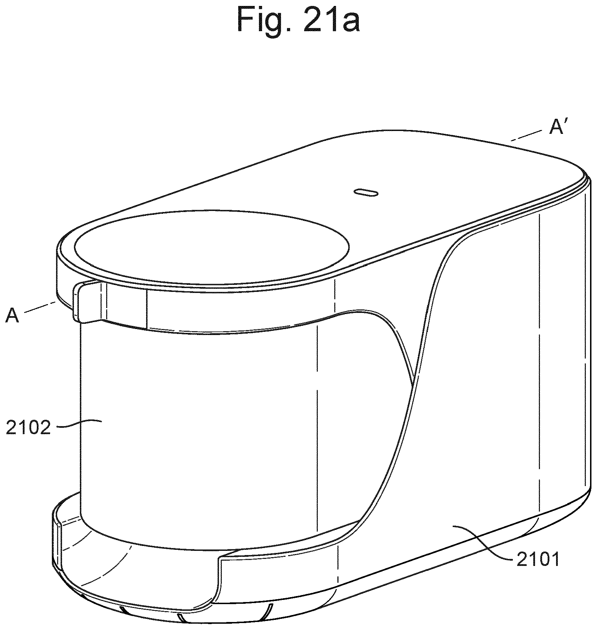

Figure 21a is a perspective view of a stand-alone separator.

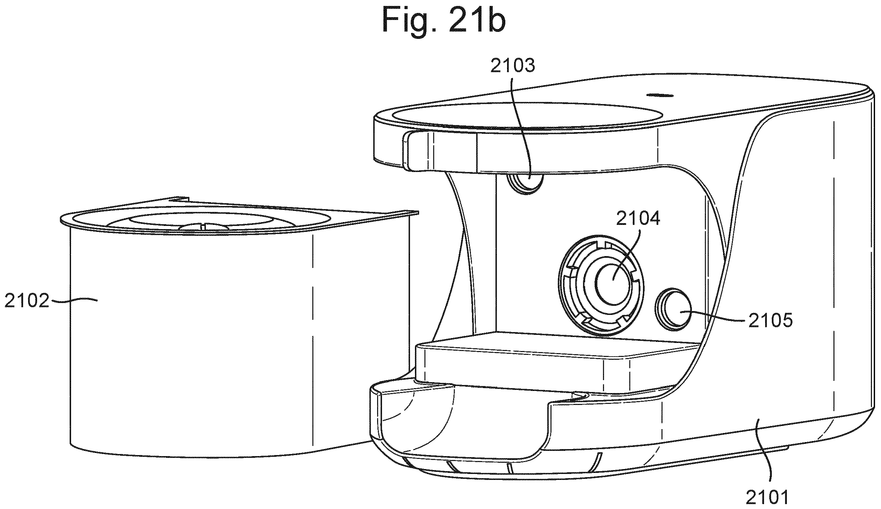

Figure 21b is a perspective view of a stand-alone separator with the jug removed.

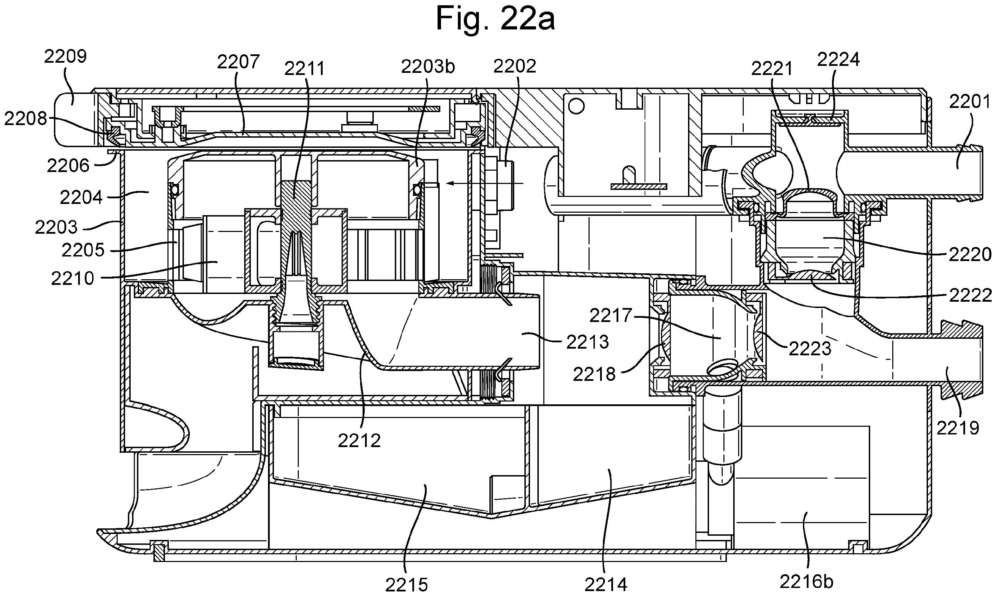

Figure 22a is a section view of the embodiment of Figure 21a.

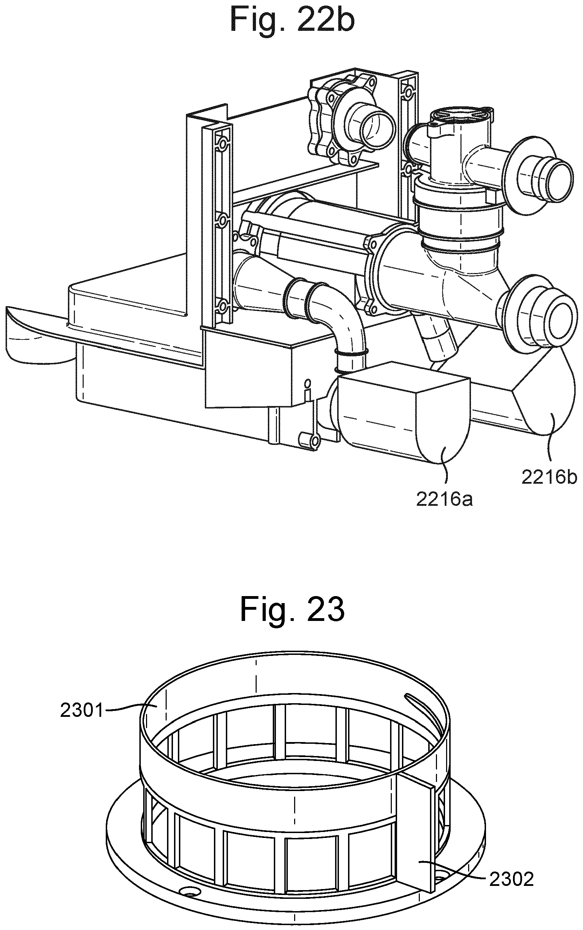

Figure 22b is a perspective view of the pump and ducting assembly of the embodiment of Figure 21a.
Figure 23 is a perspective view of a part of a filter assembly of the embodiment of Figure 21a.

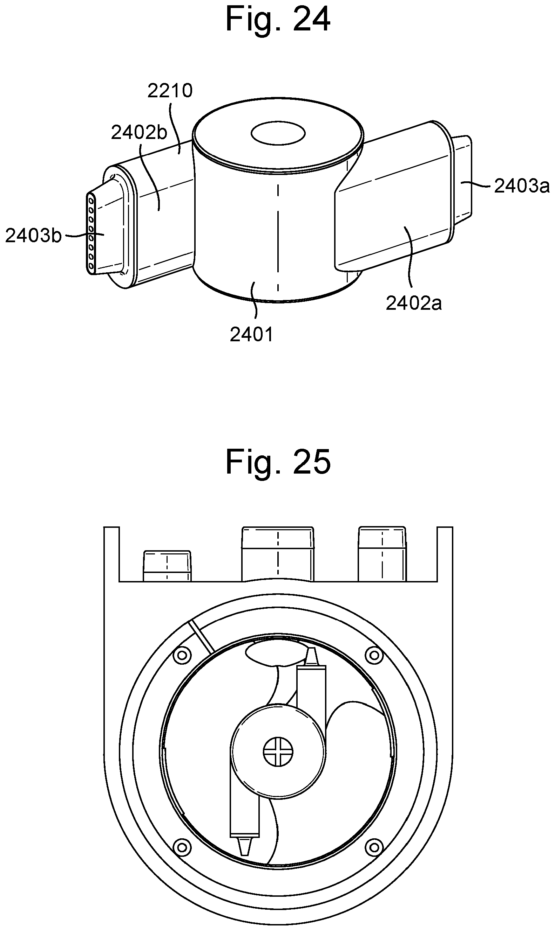

Figure 24 is a perspective view of a nozzle assembly of the embodiment of Figure 21a.
Figure 25 is a top view of the jug of Figure 21b with a cap removed.

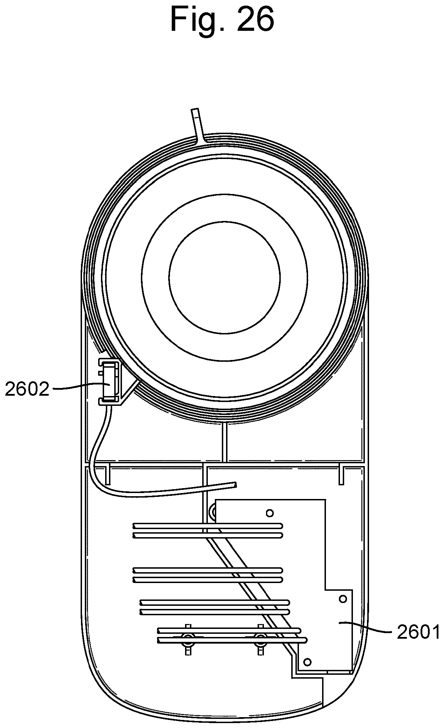

Figure 26 is a view of a printed circuit board in place in a component of the embodiment of Figure 21a.

### DETAILED DESCRIPTION OF THE PREFERRED EMBODIMENT

While the description that follows focuses on washing machines for clothes, it is to be understood that the teachings herein are not limited to use in washing machines as they are equally suited to other processing appliances, such as but not limited to driers, such as wash-dryer combination machines, tumble driers, dyeing machines, cutting machines, recycling machines, dry cleaning machines and so on. The washing machines or other processing appliances could be domestic or commercial. The teachings herein could also be used in other industries in which microparticles may be generated as a result of processing of items. References to washing machines herein are therefore to be understood as comprising any similar appliance of the types contemplated herein.

The separator described herein may be installed within the appliance itself during manufacture as shown in Figure 23a, or retro-fitted externally to a washing machine or other appliance, as shown in Figure 23b.

The separator system 2800 described above may be installed within a washing machine, as shown in Figure 28a. The waste from the washing machine drum connects to the inlet 2807 of the separator 2800 and the outlet of the separator connects to the waste outlet 2809.

A supply of fresh water 2806 for the regeneration apparatus is shown but if the recirculation system is used then this supply is unnecessary. A separator system 2808 may be located outside a washing machine, connected to the waste water outlet of the washing machine, as shown in Figure 28b. The inlet 2809 supplies effluent into the separator 2808 and the outlet 2810 feeds into the soil pipe 2805. The embodiment shown is fitted with a drain pump to enable installation below the dotted water line in the figure, i.e. the top of the soil pipe. The embodiment shown also has a recirculation system therefore a separate supply of fresh water is not needed. The device may be connected to an electrical power supply (not shown) to operate the pump or pumps. It will further be appreciated that the teachings herein are suited to any application which requires the removal of microplastics, including microfibers, from any effluent, including wastewater, within which such materials may be entrained. For example, for capturing the solid components entrained in the runoff from roadside gullies, as discussed in more detail below.

It should be noted that wastewater from a washing machine, and other applications, contain a wide variety of compounds including microplastics. Although the filter is specifically suited to the capture of microplastic, due to the environment in which it operates this system is also robust against the harsh and varied compounds the filter comes into contact with.

Effluent is understood to include wastewater from the sources mentioned above. It can also include the wastewater from Wastewater Treatment Plants. Effluent includes entrained dirt, detergent and micropollutants including microplastics, which include microfibers.

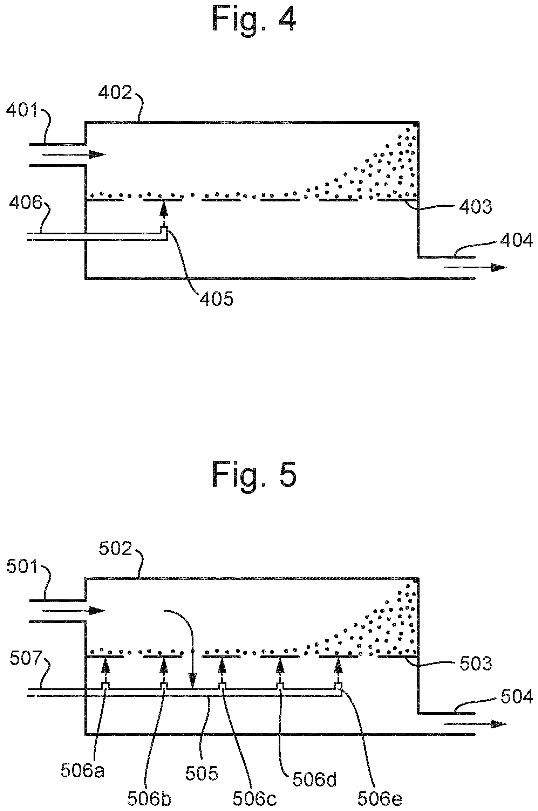

Figure 4 shows an embodiment of the invention for separating microplastics from an effluent that regenerates the pressure consumption of a filter, comprising an effluent inlet 401 feeding a channel bounded by a filter housing 402 and a sieve structure 403. The filtered effluent exits from the separator via an outlet 404. A cleaning nozzle 405 is provided that is arranged to direct a cleaning jet of wash fluid towards the filtered side of the sieve structure 403. The cleaning nozzle 405 is connected by conduit 406 to a supply of wash fluid. The cleaning nozzle is periodically activated to dislodge filtered material from the unfiltered side of the sieve structure, which regenerate the pressure consumption and thus allows more effluent to be filtered out. As the waste material is dislodged, the flow of effluent carries it further away from the inlet towards the far end of the channel.

The pressure regenerating effect can be enhanced by a filter pressure regeneration system. This system comprises a nozzle assembly having an array of cleaning nozzles. Figure 5 shows an embodiment for separating microplastics from an effluent, comprising an effluent inlet 501 feeding a channel bounded by a filter housing 502 and a sieve structure 503. The filtered effluent exits from the separator via an outlet 504. The nozzle assembly 505 comprises a plurality of cleaning jets 506a, b, c, d, e fed with wash fluid by conduit 507. The cleaning jets are periodically activated to dislodge filtered material from the unfiltered side of the sieve structure, which regenerates the pressure consumption and thus allows more effluent to be filtered. As the waste material is dislodged, the flow of effluent carries it further away from the inlet towards the far end of the channel.

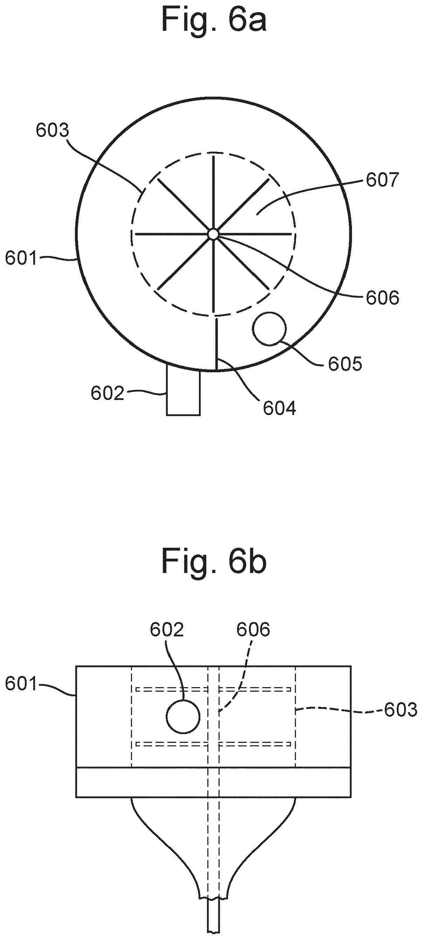

Figures 6a and 6b show an embodiment of the invention for separating microplastics from an effluent that regenerates the pressure consumption of a filter back to the level, or close to the level, of when it was new. A cylindrical chamber 601 is provided having an inlet 602 and a central cylindrical sieve structure 603. A wall 604 is provided to one side of the inlet that serves as a baffle to allow effluent to only flow one way when it enters the chamber and to allow filtered debris to collect in a specified location in the chamber. The inner wall of the chamber 601, the outer wall of the sieve structure 603 and wall 604, define a channel through which unfiltered effluent flows around to the other side of the wall 604 where it can accumulate. An aperture 605 is provided through which the filtered material can pass and be trapped. A filter pressure regeneration system is provided comprising a wash fluid conduit 606 that supplies wash fluid to an array of cleaning nozzles 607 that project radially outwards from the conduit 606 and are arranged to direct wash fluid perpendicularly at the filtered side of the sieve structure 603 to dislodge material that accumulates against the unfiltered side of the sieve structure. As material is dislodged it is swept by the flow of effluent towards the end of the channel, through the aperture 605 and into the trap. A trap is desirable but the embodiment will work without it. The jets of wash fluid can be operated continuously or periodically. The wash fluid is pressurised and forced through the cleaning nozzles so that the jets of wash fluid emanating from the cleaning nozzles have enough power to dislodge material, against the flow of the fluid component of the effluent passing through the sieve structure. In an embodiment when the filter is in direct communication with the washing machine it may be advantageous to pause washing machine drainage briefly to enable the mesh to be cleaned without the pressure from waste water drainage. The wash fluid could be clean mains water and the pressure provided by mains water pressure. A pump could also be used to pump clean water or another fluid from another source. The wash fluid could be heated to dissolve soap adhered to the sieve structure. If the wash fluid is pressurised by a pump, then the power consumption of the pump is a design consideration; minimising this power consumption is preferred to reduce the costs of the pump itself and its operating cost.

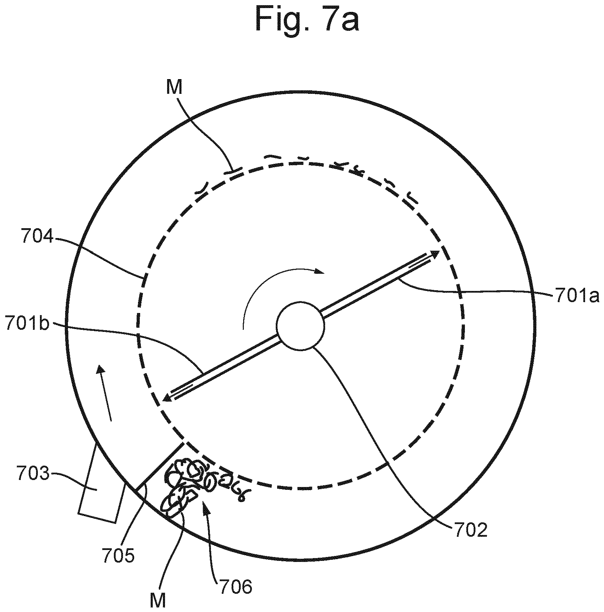

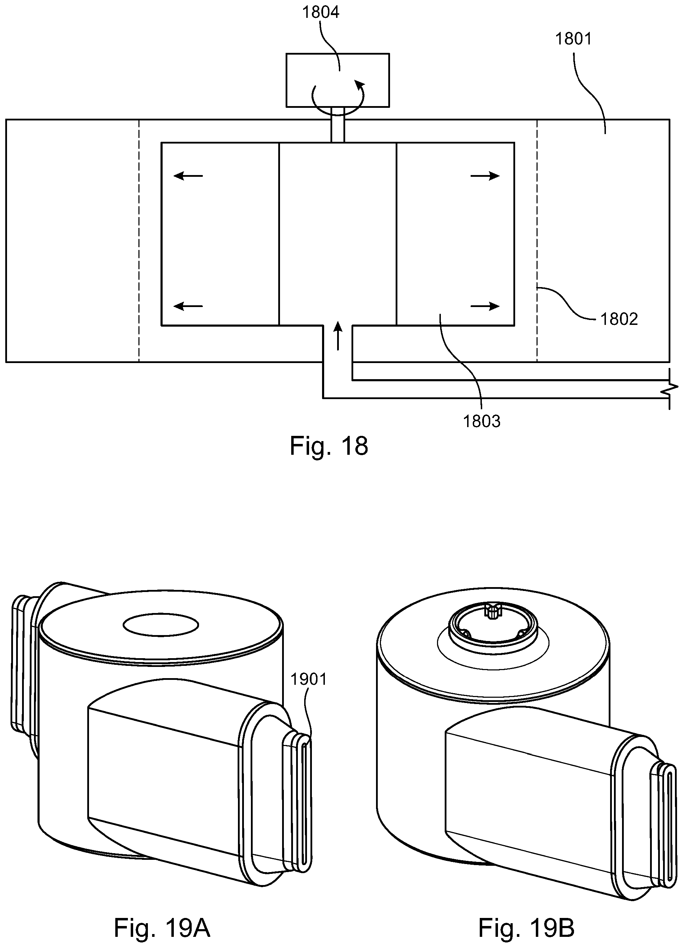

Figure 7a shows an embodiment having a filter pressure regeneration system comprising a nozzle assembly that has two rotatable opposing cleaning nozzles 701a, b extending radially from a central conduit 702. The central conduit 702 feeds the cleaning nozzles with pressurised wash fluid. Effluent enters the separator via inlet 703 and passes around the channel formed by the outer wall of the chamber and the sieve structure 704 around to the wall 705 where filtered material M accumulates in the trap 706. The cleaning nozzles 701a, b are aligned perpendicularly to the sieve structure 704. The cleaning nozzles can be rotated by a motor (shown in Figure 18) or other means. Other means include harnessing the upstream flow of unfiltered effluent to provide energy for mechanical operation of the propelling nozzles.

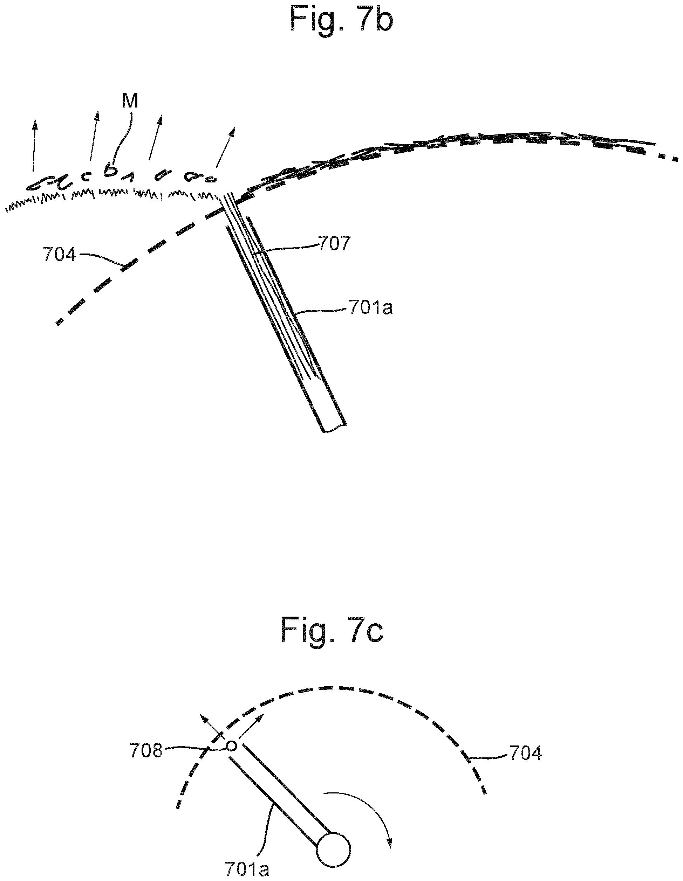

In Figure 7a, the cleaning nozzles are rotated in the direction of flow of the effluent. Figure 7b shows a detailed view of the waste material M being ejected from the unfiltered side of the sieve structure 704 by a jet of wash fluid 707 emanating from the cleaning nozzle 701a. By having a reduced number of rotating cleaning nozzles, the same coverage of the jet of wash fluid against the sieve structure can be achieved as with the array of fixed cleaning nozzles shown in Figure 6a, but with less power required of the wash fluid pump. The cleaning nozzles could also be directed downwards to urge the ejected material down towards the trap.

The wash fluid could be water or it could be a mixture of air and water. Figure 7c shows a jet of cleaning fluid that includes water and air, where a pellet of water 708 is seen being ejected from the cleaning nozzle 701a. This increases the speed and ejection effect of the wash fluid.

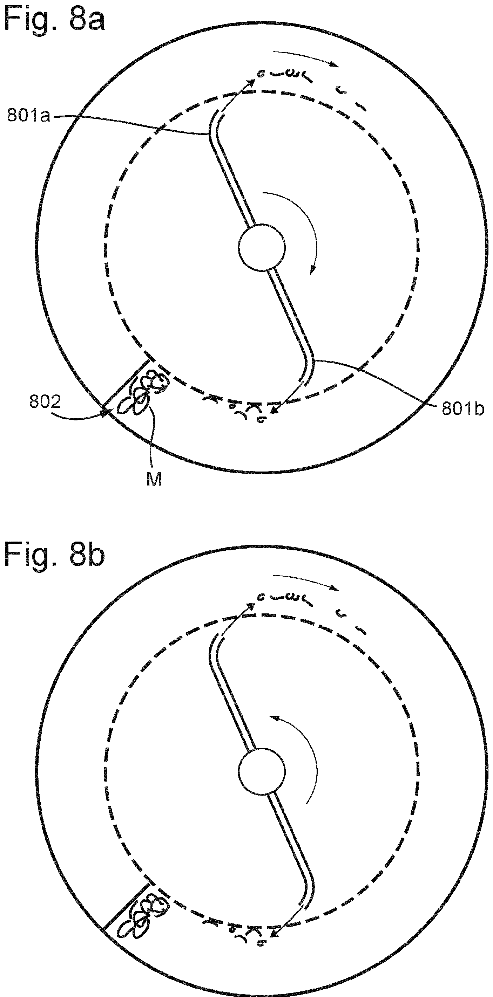

The cleaning nozzles of the filter pressure regeneration system can be constructed so that a component of the pressurised wash fluid is tangential to the filtered side of the sieve structure. Figure 8a shows a filter pressure regeneration system having such an arrangement. The end of the cleaning nozzles 801a, b are angled in the direction of flow of the effluent. This has the effect of ejecting the filtered material further out into the flow of effluent where it can be swept further along towards the trap 802 before it re-attaches to the sieve structure under the action of the flow of effluent through the sieve structure. Figure 8a shows the nozzle assembly being rotated in the direction of flow of the effluent. Figure 8b shows the nozzle assembly being rotated against the flow of effluent.

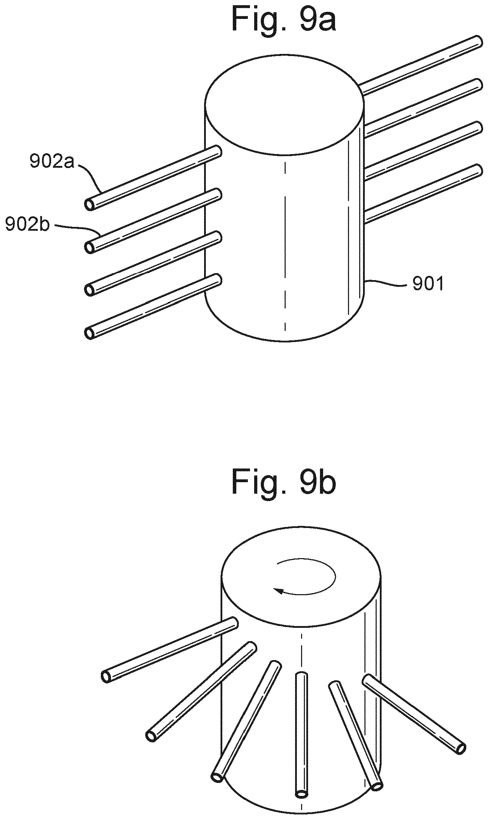

Figure 9a shows an alternative arrangement of a nozzle assembly for the filter pressure regeneration system. A central hub 901 supports an array of cleaning nozzles 902a, b etc that extend radially from the hub 901. The hub includes a conduit to feed pressurised wash fluid to the cleaning nozzles. The cleaning nozzles are arranged as a stack of four directly above each other and a matching stack directly opposite on the hub. This arrangement ensures that the entire width of the sieve structure is cleaned in each sweep of the nozzle assembly.

Figure 9b shows a nozzle assembly where the array of cleaning nozzles are arranged in a helix configuration around a central hub. This encourages the ejected filtered material downwards in the flow of effluent and to reach the trap more quickly.

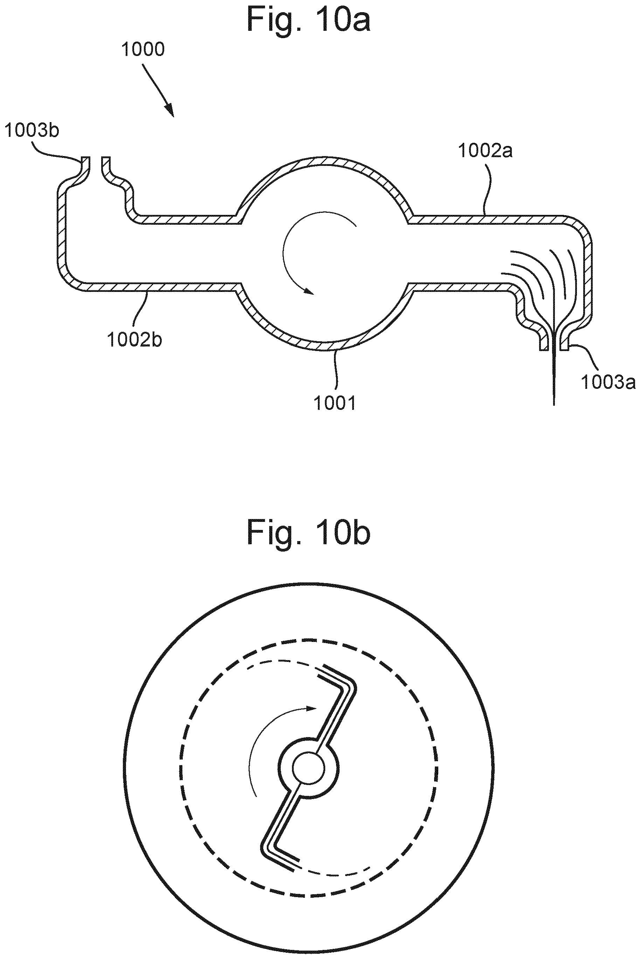

Figure 10a shows a nozzle assembly rotation unit 1000 for propelling the nozzle assembly of the filter pressure regeneration system. The nozzle assembly rotation unit 1000 is fixed to the cleaning nozzles. The rotation unit comprises a central hub 1001 that acts as a conduit for propulsion fluid. The propulsion fluid and the wash fluid could be the same fluid, where the wash fluid conduit and rotation unit hub are connected. The rotation unit 1000 has radially extending arms 1002a, b that terminate in propulsion nozzles 1003a, b that are directed perpendicularly to the arms. Fluid exiting the propulsion nozzles is directed tangentially to the axis of the hub, causing the rotation unit 1000 to rotate and thus rotate the nozzle assembly that is fixed to it.

Figure 10b shows a nozzle assembly rotation unit 1000 in action.

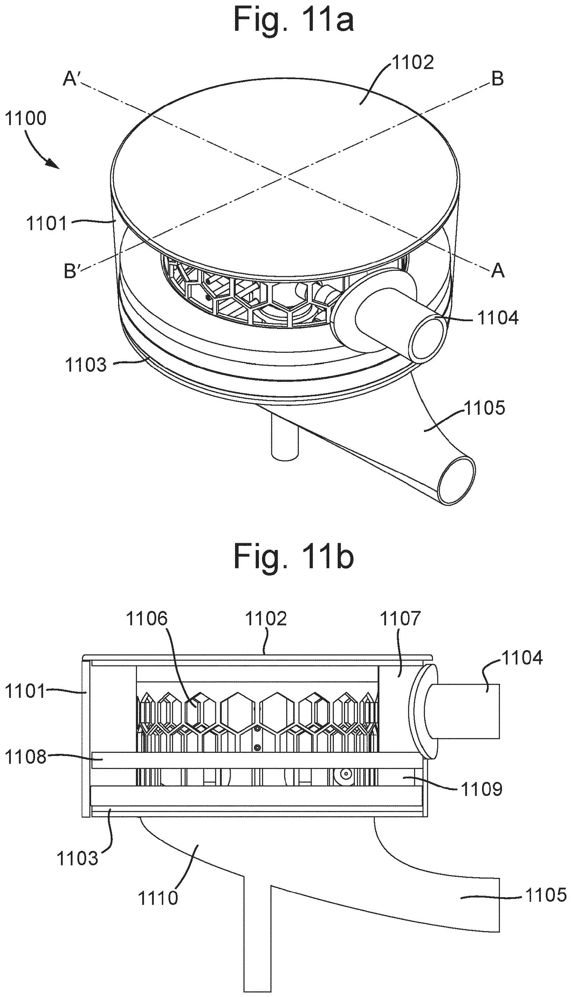

Figure 11a shows an embodiment of a separator unit that includes a filter pressure regeneration system. The separator unit 1100 comprises an outer cylindrical wall 1101. In this embodiment the outer wall is transparent so that a user can see when the separator is operational and can also see the accumulated filtered waste. The separator unit 1100 has a circular cap 1102 and base 1103. An inlet 1104 is provided in the wall 1101. An outlet 1105 is provided in the base 1103.

Figure 11b shows a side view of the separator unit 1100. A cylindrical sieve structure is provided coaxially with the outer wall 1101. The sieve structure extends between the cap 1102 and the base 1103 and provides a seal beyond which unfiltered effluent cannot pass. The sieve structure comprises an open support scaffold to which is fixed a mesh of aperture 50 micrometers. Mesh sizes in the range 5 - 150 micrometers are also suitable. The mesh separates the solid material from the liquid component of the effluent. An interior dividing wall 1107 creates a channel for the effluent to flow around the sieve structure, starting at the inlet 1104. The chamber is divided horizontally into two parts by a partition 1108. The partition 1108 has an opening on the other side of the interior dividing wall 1107. The combination of the opening and the lower part of the chamber beneath the partition 1108 provide a trap 1109 within which waste material can accumulate. The outlet 1105 is connected to a scoop 1110 that collects filtered effluent that passes through the mesh.

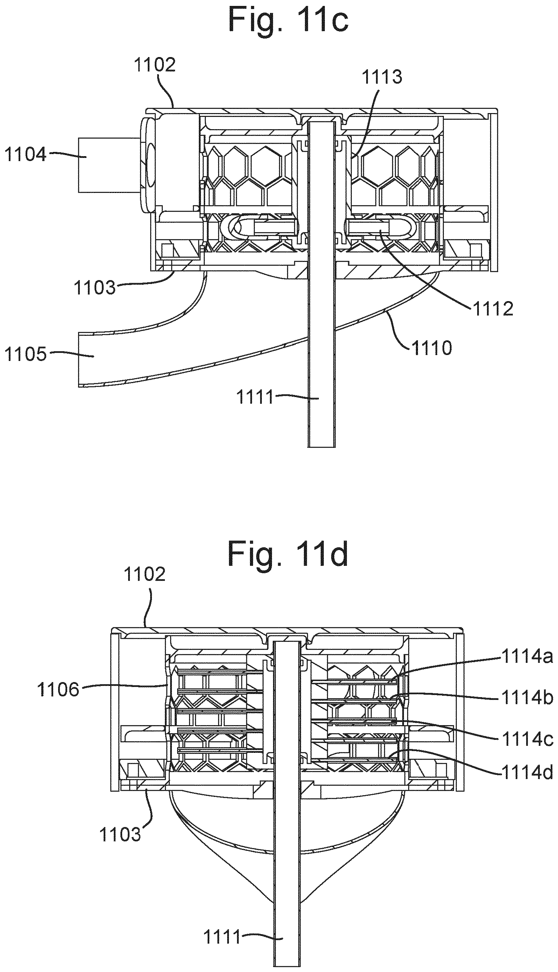

Figure 11c is a cross section of the separator unit 1000 taken along line A-A' in Figure 11a, where components of the filter pressure regeneration system are shown. A central vertical conduit 1111 provides wash fluid to the nozzle assembly. The nozzle assembly includes propulsion nozzles 1112 mounted on a rotatable hub 1113.

Figure 11d is a cross section of the separator unit 1000 taken along line B-B' in Figure 11a, where components of the filter pressure regeneration system are shown. The nozzle assembly includes cleaning nozzles 1114a to d mounted on the rotatable hub 1113. The cleaning nozzles extend radially out from the hub to be proximal to the filtered side of the sieve structure.

The central mounting hub 211 as shown in figure 2a has a hollow core to feed the wash fluid to openings that allow the wash fluid to pass through the rotational nozzles. The mounting hub may be removable from the main filter housing to aid manufacturability and servicing of the components.

The structure on which the mesh is mounted may have an opening hatch that is user accessible. This allows for maintenance of the product during life. This might be advantageous if the rotational nozzles where to become jammed due to ingress and accumulation of debris over time.

The separator unit is around 15cm in diameter. However, it will be appreciated that larger or smaller diameters could be selected depending on the application. The size of the unit is selected on the flow rate of effluent to be filtered. A separator diameter of 15 cm is sufficient to process the effluent from a domestic washing machine flowing at a rate of 13 litres per minute.

The open area of the mesh that enables the passage of water at a given flowrate can be adjusted by changing either the surface area of the mesh or the mesh aperture. The mesh aperture effects the efficiency, so a smaller mesh aperture is generally preferable to provide greater efficiency. The mesh surface area is a function of the height and diameter, therefore a given area can be matched by increasing the height if the diameter is reduced, and visa versa. All variables can be adjusted to meet product packaging and efficiency specification requirements.

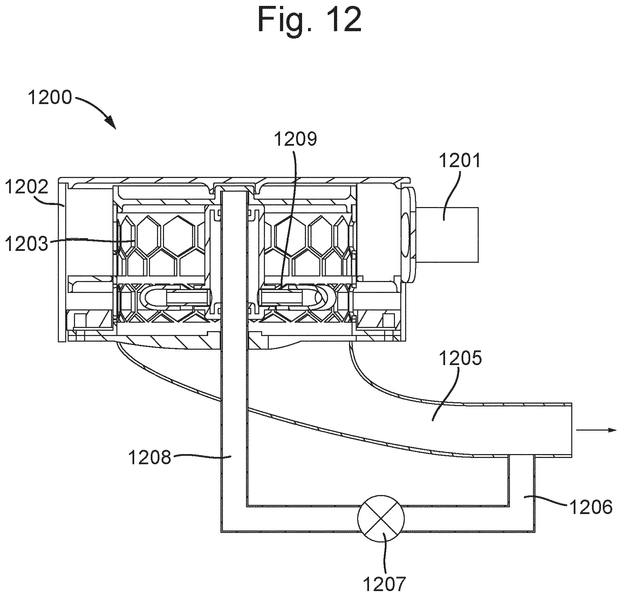

In an embodiment, the filtered effluent itself is re-circulated to clean the sieve structure. Figure 12 shows a separator unit 1270 has an inlet, a cylindrical housing and a sieve structure 1203. An outlet 1205 collects filtered effluent. A portion of the filtered effluent is diverted into conduit 1206, where it is pressurised by pump 1207 and directed into the central vertical conduit 1208 that provides wash fluid to the nozzle assembly 1209.

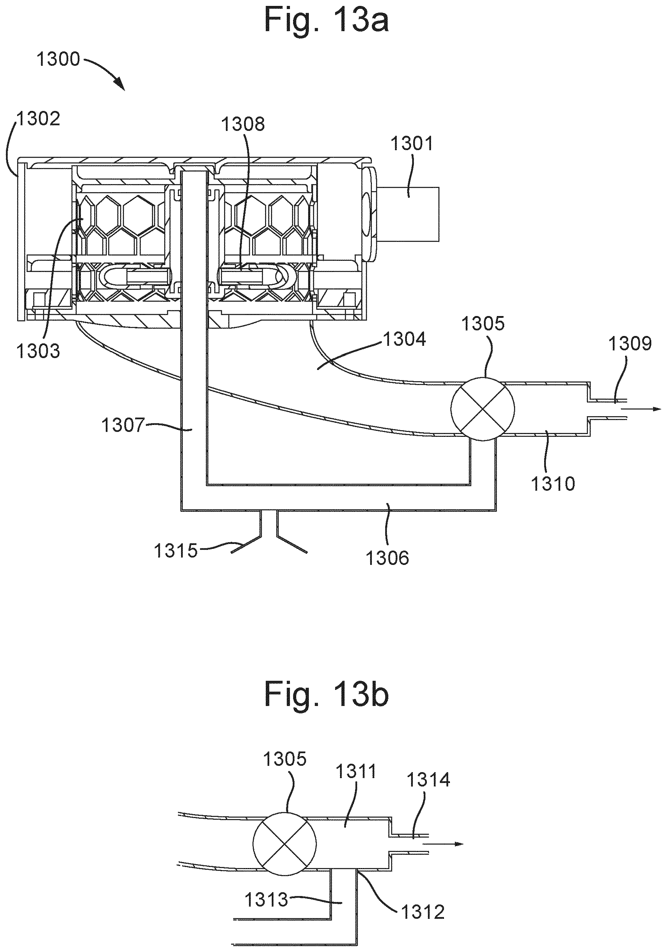

Figure 13a shows an embodiment that is suitable for location below the waterline and that also recirculates some of the filtered wastewater to regenerate the filter pressure. The separator unit 1300 has an inlet 1301, housing 1302, sieve structure 1303 and outlet 1304. All of the filtered effluent from the outlet 1304 is pumped out via pump 1305. The pump 1305 is arranged to divert a portion of the filtered effluent back via conduit 1306 to the central vertical conduit 1307 that provides wash fluid to the nozzle assembly 1308. A restriction 1309 is provided in the pump outlet pipe 1310 to ensure that an adequate volume of fluid is re-circulated to the pressure regeneration system. Alternatively, the pump 1305 may have a single outlet as shown in Figure 13b and a junction 1312 that diverts some filtered effluent to conduit 1313 to be re-circulated into the pressure regeneration system and the rest to the soil pipe. A restriction 1314 is provided to determine the proportion of filtered effluent that is re-circulated. An air inlet 1315 in the conduit 1306 may be provided that allows air into the pressure regeneration system to enhance the cleaning effect of the jet of cleaning fluid against the filtered side of the sieve structure.

It may be advantageous to be able to control the drainage of a separator unit and the pressure regeneration separately. A drainage pump and a recirculation pump may be provided.

An air pump may be used to assist with regeneration and drainage.

A reservoir with a fluid sensor may be provided beneath a separator. The fluid sensor detects when fluid is present in the reservoir. The fluid sensor switch is arranged to control a pump that drains the unit..

A pressure sensor can be provided to monitor the change in pressure across the filter chamber and detect when effluent is backing up and this can be used to activate the pump to regenerate the filter pressure.

A bypass system may be provided to connect the inlet to the outlet. It ensures that if the separator gets blocked or the regeneration system fails for some reason, the entire wash load of effluent will not back up and cause a flood, or impact the performance of the washing machine or drainage cycle but be diverted to the waste outlet.

A pressure-activated valve is located in the conduit. The pressure-activated valve opens when the pressure at the inlet relative to the outlet exceeds a certain pre-set value. Therefore, if effluent backs up at the inlet because the filter is clogged, the valve will open and let effluent through to the outlet where it can safely discharge to a waste pipe. Alternatively, the valve may be of a type that can be electronically controlled. A pressure sensor that detects a pressure differential between the two sides of the sieve structure can control the valve, so that if the pressure differential reaches a predetermined level, the valve is operated and the bypass activated.

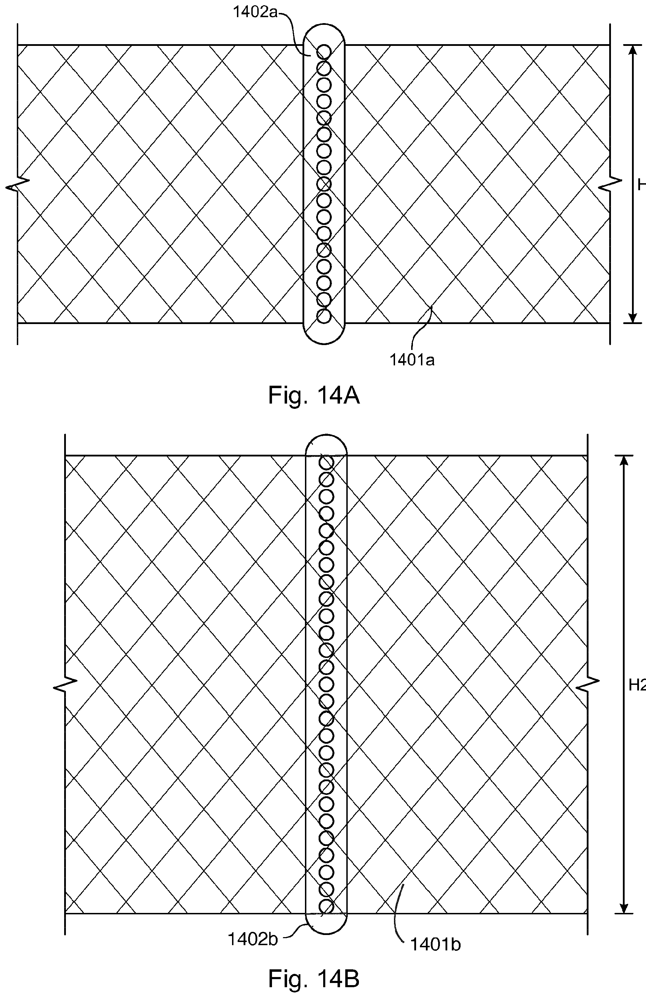

The dimensions of the unit shown in Figures 6a and 6b can be varied to change its performance characteristics. For example, the height of the mesh structure 603 can be varied as shown in Figures 14a and 14b, which provides a greater surface area and therefore an increase in the flow rate. As the height of the mesh is scaled so the height of the nozzle structure is scaled so that in use the entire surface of the mesh is sprayed. Figure 14a shows a mesh 1401a having a height H1 where the unit has nozzles 1402a extending across height H1. Figure 14b shows a mesh 1401b having an increased height H2 where the unit has nozzles 1402b extending across height H2.

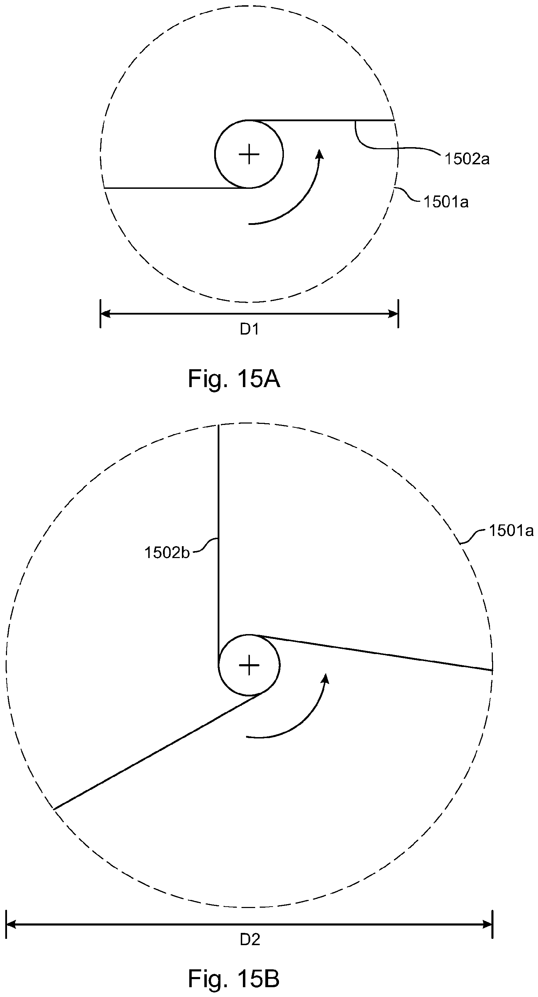

The volume of the chamber can be increased to capture larger volumes of effluent. The volume of the chamber is increased by increasing the diameter or height of the separator. This is shown in Figures 15a and 15b. As the diameter of the mesh structure is increased, so the diameter of the nozzle assembly is increased. Figure 15a shows a mesh structure 1501a of diameter D1, where the unit has a nozzle assembly 1502a having two arms. Figure 15b shows a mesh structure 1501b of increased diameter D2 where the unit has a nozzle assembly 1402b that now has three arms to ensure adequate spraying of the mesh structure during use.

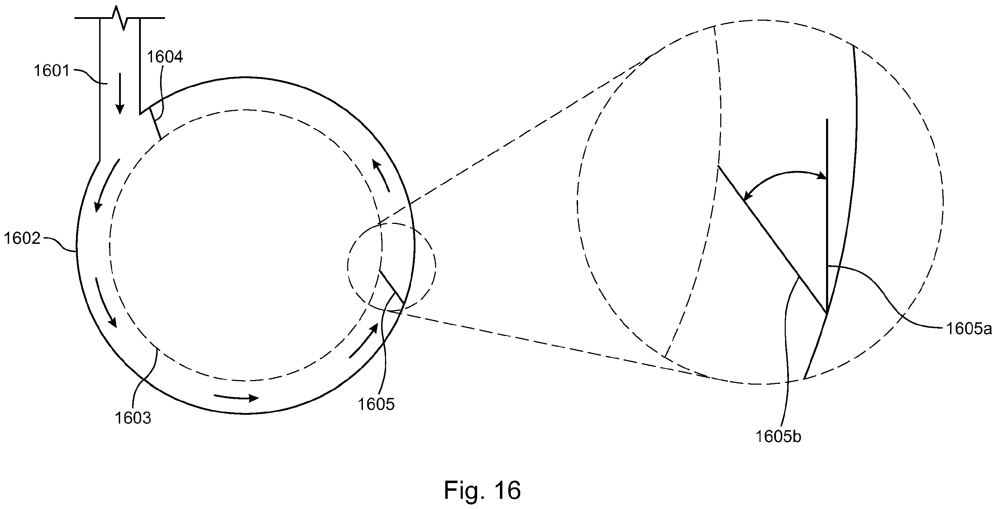

The filter chamber may be provided with features that help to retain the trapped microfibers in a particular location for ease of removal. For example, a flap may be provided in the chamber, as shown in Figure 16. Effluent enters into inlet 1601 and passes around the chamber guided by the chamber wall 1602 on one side and a mesh structure 1603 on the other. Microplastics will accumulate against end baffle 1604 as the effluent moves around the chamber. As the flow of effluent starts and stops with the drainage cycles of the washing machine, the flow of effluent can reverse and carry the microplastics back around the chamber. A movable flap 1605 is provided that is open (position 1605a) when the flow of effluent is in one direction and closes (position 1605b) when the flow reverses. The liquid component of the effluent will tend to pass through the mesh when the flap is shut, while the solid microplastics will be prevented from travelling back into the chamber. The flap 1605 can be a fixed flexible rubber unit or a rigid hinged unit.

The flap can also be a rigid feature that may be perpendicular to the circumference of the chamber of angled such that effluent can pass in one direction but is restricted from passing back. Although some effluent can pass back in this embodiment it may be advantageous to simply manufacturability and increase product robustness.

The geometry of the chamber can be varied to increase the flow velocity of the effluent in the chamber. This can help to increase the filters' ability to separate effluent and reduce the pressure consumption of the filter system.

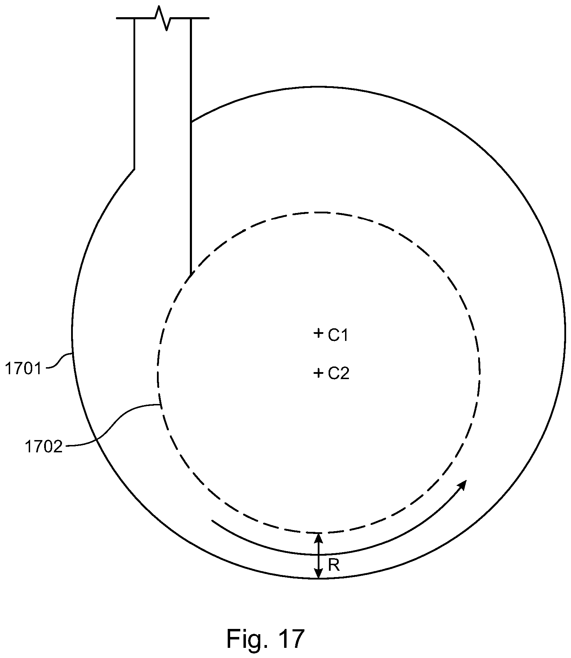

Figure 17 shows such an arrangement, where the cylindrical chamber 1701 has a center located at C1 and the cylindrical mesh structure 1702 has a center located at C2, where C1 and C2 are offset. This creates a restriction R where the velocity of effluent increases.

The nozzle assembly can be rotated using a direct drive such as an electric motor, as shown in Figure 18. The chamber 1801 has a mesh structure 1802 and nozzle assembly 1803, where the nozzle assembly is driven by motor 1804. This has the advantage of improving the reliability of the nozzle assembly. When the rotation of the nozzle assembly is powered by water pressure, the efficiency of the bearing surfaces between the nozzle assembly and the mounting spigot is critical. If these surfaces become clogged with debris then the nozzles can stop rotating. Furthermore, the use of a motor to rotate the nozzle assembly can remove the need for a pump to pressurize the wash fluid to the nozzles; the centrifugal force generated in the nozzles draws the wash fluid into the nozzles throws it against the sieve structure.

The nozzle assembly itself can be optimised to reduce blockages from wash fluid containing small traces of debris. When the wash fluid being used is re-circulated filtered effluent, debris that is too small to be stopped by the sieve structure, or an accumulation of smaller particles that together form a larger blockage, can get trapped in the nozzles. To overcome this, a wide slot 1901 can be used, as shown in Figure 19a.

Optimisation of the nozzles is critical as this is key determining factor for the dispersion and velocity of wash fluid. Different variations are possible dependent on application. In an embodiment nozzle arms may be arranged so that each nozzle set is not identical. Opposing rotating arms may be arranged so that a single nozzle set does not clean the complete surface of the mesh on rotation, but when followed by the second nozzle set all the remaining mesh surface will be cleaned. This may be advantageous in some scenarios as a more efficient method of directing wash fluid, such as at lower velocities.

In a scenario with nozzles that are not identical, it is a consideration that the volume of fluid emitted from each nozzle is equal to retain a force that is balanced between each opposing arm.

In another embodiment, there may only be a single nozzle arm, as shown in Figure 19b. This may be advantageous to optimise the velocity of fluid emitting from the nozzle and to reduce drag from the nozzle assembly during rotation.

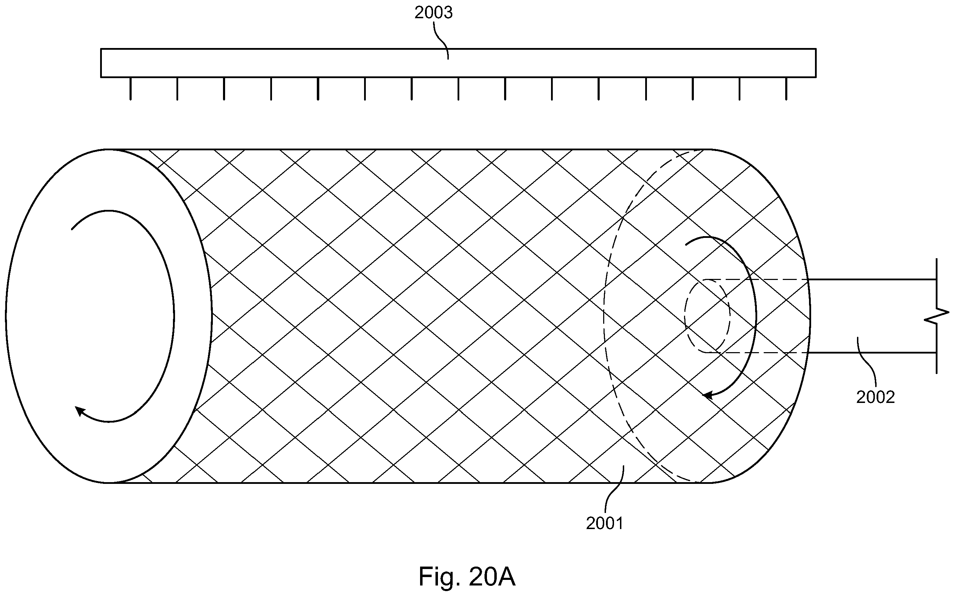

Other ways to achieve the washing of the filter mesh include having a static nozzle assembly as shown in Figure 20a or inverting the structure to locate the nozzle assembly outside the sieve structure as shown in Figure 20b. Figure 20a shows a mesh structure 2001 having an inlet 2002. The mesh structure is rotatable about a central axis. The structure is mounted within a larger chamber, not shown, that has an outlet. A fixed nozzle assembly 2003 is provided on the outside of the sieve structure and the mesh structure is rotated to dislodge debris. A wall may be provided (not shown) to one side of the inlet such that the effluent is guided around the sieve structure through a channel such that filtered microplastics dislodged by the wash water from the cleaning nozzle accumulates on the side of the wall away from the inlet.

Figure 20b shows a rotatable nozzle assembly 2004 located outside of a cylindrical mesh structure 2005. Within the mesh structure 2005 is a solid core 2006 that defines a wall. An inlet 2007 is provided to one side of a baffle 2008. Together they direct effluent around the sieve structure. The entire assembly is mounted within a chamber (not shown) that has an outlet to collect filtered effluent passing from the inside to the outside of the mesh structure. The nozzle assembly 2004 can be rotated around the mesh structure and wash fluid directed against the mesh to dislodge material.

Figure 20c shows an alternative nozzle assembly having a nozzle 2005 arranged to direct a stream of fluid 2010 towards a rotatable object 2011. The object has features 2012 that are arranged to deflect the stream of fluid outwards towards the sieve structure 2013. The features 2012 are also arranged to cause the object to rotate, so that the projected fluid sweeps across the surface of the outlet side of the sieve structure and thus dislodges debris on the other side.

The separator system described above may be installed within a washing machine or located outside a washing machine, connected to the waste water outlet of the washing machine. A more detailed description of a stand-alone separator is provided below:
A separator unit for locating externally to a textile processing apparatus such as a domestic washing machine is shown in Figure 21a. The unit 2100 comprises a body 2101 that has a waste water inlet and outlet (not shown) and a removable jug 2102. The jug includes a filter that can collect filtered microfibers. Removal of the jug allows the filtered microfibers to be emptied. Figure 21b shows the unit 2100 with the jug removed and separated from the unit. The jug has conduits for effluent inlet, effluent outlet and a pressure consumption regeneration fluid feed. The pressure consumption regeneration fluid is recirculated filtered effluent. The conduits terminate in stubs and the main body of the unit has openings to receive these conduit stubs; effluent inlet 2103, filtered effluent outlet 2104 and recirculated filtered effluent 2105. Each opening has a watertight seal that ensures no fluid leaks from the joints between the stubs and the openings when the jug is in place.

Figure 22a shows a cross section of the unit 2100 taken along line A-A' in Figure 21a. The unit has a waste water inlet 2201 that can be connected to the outlet of a washing machine. A conduit leads to the inlet stub 2202 of the jug 2203 where the waste-water, when the unit is in use, is directed tangentially into a cylindrical chamber 2204 of the jug 2203. Centrally located within the jug 2203 is a cylindrical filter assembly 205, shown in more detail in Figure 23. It is a plastic cage 2301 having a series of openings between a set of vertical ribs. A mesh (not shown) is overmoulded to the plastic cage. The mesh is flush on the outside of the ribs. A baffle 2302 is provided that forms a wall inside the chamber 2204 to one side of the jug inlet 2202 so that effluent progresses around the inside of the chamber in only one direction. Captured particles pass around the filter, collect at the baffle and build up at the far side of the filter away from the inlet. This limits recirculation of the captured particles. The mesh by the inlet is kept clear and clean from particles. Therefore, when wastewater enters the filter chamber it can pass through the mesh. The filter assembly has a cap 2203b to prevent unfiltered effluent overflowing into the outlet. This filter cap can also be removed to allow the user to gain access to the regeneration apparatus for maintenance. The cap is designed in the top of the filter assembly to ensure that no captured effluent can escape through this route during maintenance. The jug 2203 has an open top so that a user can access the interior to remove filtered microplastics. The jug 2203 has an outer rim with a flange 2206. When the jug 2203 is installed in the unit, a lid 2207 is lowered onto the jug. The lid includes a seal 2208 that engages with the flange 2206. A lever 2209 operates a mechanism to lower the lid onto the jug and provide a water-tight seal of the jug into the unit.

In another embodiment the filter lid may be a removable component that is assembled by the user by rotating the lid around the main filter body and retained in place with tabs.

Located within the filter assembly of the jug is a pressure consumption regeneration apparatus comprising a rotatable nozzle assembly 2210 mounted on a hollow spigot 2211. The rotatable nozzle assembly is captive on the spigot by the filter assembly cap 2203b. The spigot is fed by a conduit that is routed through the unit to a recirculating pump 2216a, shown in Figure 22b, that can provide wash fluid to the nozzle assembly. The nozzle assembly is shown in more detail in Figure 24. Two hollow arms 2402a, 2402b are connected to a central hub 2401; they are offset from the rotational axis and project tangentially from the hub The end of each arm has a vertical column of flexible nozzles 2403a, 2403b that are arranged to extend over the height of the mesh. The nozzles are flexible so that any limescale build up can be easily cracked off. The nozzles may also be rigid. The offset tangential arrangement of the nozzle assembly means that when pressurised fluid is forced through the nozzles by the recirculation pump, it will cause the assembly to rotate at around 30-150 rpm. Rotation is arranged to be in the opposite direction to the flow of fluid around the chamber; in this way, the angle of impact of the jet of fluid emitted from the nozzles is with the flow of effluent, which allows debris that is dislodged to flow further around the mesh than if the angle was against the flow of effluent. Figure 25 shows the nozzle assembly in place within the jug assembly. The spigot on which the regen apparatus is mounted operates as a plain bearing. It has a bleed path at the upper and lower section that allow an amount of wash fluid to exit. This is limited by a labyrinth seal of grooves. It is important to allow wash fluid to exit here as it ensures that any debris that may pass into this mechanical system can also be passed out and limit the risk of jamming. The grooves are toleranced to allow the largest particle that can fit through the mesh aperture in any orientation to pass through this bearing.

The jug 203 is provided with a moulding 2212 that collects the filtered effluent that has passed through the mesh. This moulding channels effluent to the jug outlet 2213. The jug outlet feeds two reservoirs; a recirculation reservoir 2214 and a drainage reservoir 2215. The recirculation reservoir is connected to the recirculation pump 2216a. The drainage reservoir is connected to a drainage pump 2216b, shown in Figure 22b. The outlet from the drainage pump feeds into a chamber 2217 that has a one-way valve 2218 to prevent filtered effluent from returning to the reservoirs 2214, 2215. Filtered effluent leaves the unit via outlet 2219.

Upon drainage from the filter unit the reservoirs are arranged to prioritise filling of the recirculation reservoir before the drainage reservoir. This ensures that there is always a supply of wash fluid for recirculation and it is not removed by the drainage pump.

The volume of the recirculation reservoir is designed to ensure a supply of wash fluid that can provide constant recirculation without fully emptying the reservoir. It might be advantageous in some scenarios to limit this and only provide enough wash fluid for a 'burst' as the reduction in this volume enables the product size to be reduced.

In another embodiment the reservoirs and other components may be located at a distance from the filter unit and connected by conduits. It can be advantageous to split out these components as it provides flexibility for when integrating the filter into another system, such as internally to a washing machine.

The volume of the drainage reservoir is designed to ensure any back flowing fluid from the outlet ducting and hose pipe can back fill into this chamber without overflowing. This ensures that the user can remove the filter jug when the product is installed close to the floor level and not result in any flooding.

The geometry of the reservoirs is designed with an angled base and centralised feed point for the pumps. This reduces sedimentation in the tank by removing static flow areas in the tank and creating a dynamic drainage environment that encourages particles to travel to the feed point and be removed by the pump along with any waste water.

The geometry and depth of the reservoirs is further designed to limit vortexing of the pumps which would otherwise reduce their ability to draw water into the pump and reduce their operational efficiency
The inlet 2201 and outlet 2219 of the unit 2100 are connected by a conduit 2220. A dispensing valve, 2221 is provided at the entrance to the conduit 2220. The dispensing valve opens at a predetermined pressure, so that if there is a fault in the unit and pressure builds up, the valve operates and effluent bypasses the filter section of the unit straight to the outlet. One-way valve 2222 is provided to prevent filtered effluent re-circulating and one-way valve 2223 is provided to prevent by-passing effluent to enter the reservoirs. In another embodiment of the design, the user can gain access to the bypass for maintenance, for example to remove a blockage.

There are valves that seal around the spigots of the filter jug when assembled to static conduits. On the inlet to the filter unit there is also a passive one-way valve that is opened on insertion of the inlet spigot and closes automatically if there is a flow of effluent when the filter unit is removed.

An air valve 2224 is provided in the inlet to prevent the recirculation pump and/ or the drainage pumps from drawing water out of a connected washing machine, to ensure that there is sufficient water left in the washing machine.

Figure 26 shows the arrangement of the electronic control system of the unit, mounted on a PCB 2601. Two sensors are provided; i) a capacitive sensor in the inlet or other areas of the ducting depending on the control method and software logic, which detects the presence of effluent and ii) a pressure differential sensor that is arranged to measure the difference in pressure between the two sides of the mesh. The pressure differential sensor can be used to indicate a difference in pressure between each side of the mesh. This can be used to monitor the health of the system and can be used to provide feedback to the logic, such as indicating if the mesh is soon to blind over with debris and regeneration should be activated. A microswitch 2602 is provided that detects when the jug is fully located in the unit. Any other type of sensor may be used to detect mechanical movement, such as an IR sensor. If the jug is not located and the unit is switched on, then an alarm is sounded to alert the user to locate the jug before use. This can also be operated on a timer so that during maintenance the user is reminded to replace the jug and not leave the unit disassembled.

The capacitive sensor is a type of fluid sensor; any other type could be used, such as a float switch.

The electronic system is arranged to operate the unit in numerous modes involving different combinations of sensors and software logic, to optimise the system operation or vary it for differing regional, user, functional or cost requirements. For example, only a capacitive sensor could be used (no pressure sensor) to reduce the number of components and cost. The following are examples of modes of use:

### Example 1 - Capacitive Sensor and Pressure Sensor

### Active Filtering:

If the capacitive sensor indicates that there is effluent present at the inlet (i.e. that the washing machine is emptying) and the pressure sensor indicates that the mesh has blinded over, then the drainage pump can be activated to drain the unit and the recirculation pump is activated to spray the mesh to remove the debris and regenerate the pressure consumption. Active filtering may run for a set time once it has been triggered.

### Passive Filtering:

If the pressure sensor indicates that the pressure differential is below a threshold and the capacitive sensor is triggered, then passive filtering is initiated. This is where the recirculation pump is turned off and if desired only the drainage pump is operated.

### Drainage Cycle:

If the capacitive sensor indicates that effluent at the input has ceased, or the pressure sensor indicates that no fluid has passed through the filter for a period of time, then the recirculation pump is operated after a delay, which could be around 100 seconds, to clean the mesh; this delay can be adjusted. Shortly after, for example 2 seconds, the drainage pump is operated to drain the system. The recirculation pump is then turned off after, for example, a further 3 seconds and then the drainage pump is turned off after, for example, 10 seconds. If the capacitive sensor detects input effluent then the drainage cycle is interrupted and the filtering mode is initiated again.

### Standby:

If the capacitive sensor does not detect any water and the drain cycle has run, then the recirculation and drain pump are both turned off.

### Example 2 - Capacitive Sensor only

The capacitive sensor is provided on the inlet pipe. When water is detected the pumps are activated until water is not detected anymore. The pumps are programmed to overrun by a predetermined number of seconds to clean the mesh and drain the filter.

### Example 3 - Capacitive sensor with current monitoring on the drainage pump.

The capacitive sensor is provided on the inlet pipe. When water is detected, the drain pump is turned on. If current on the drain pump is low while the fluid sensor is reading high, then the recirculation pump is turned on. The recirculation pump is turned off after a predetermined time while the drain pump is left on.

### Example 4 - Integrated in washing machine - Pressure Sensor only

The separator unit may be integrated into a washing machine or other textile processing apparatus. No fluid sensor is required as integration with the washing machine control logic enables the filter to know when water is being pumped into the filter. When fluid is pumped through the filter and the pressure sensor is low, the recirculation pump is not run, but the drain pump (if fitted) can be activated. When fluid is being pumped through the filter and the pressure sensor is triggered, then the recirculation pump is run. The washing machine drain cycle can be paused at this point for a few seconds to increase the pressure consumption regeneration effectiveness.

The unit may be used to reduce the water consumption of an existing washing machine or other textile processing equipment, by recirculating the water from the output back into the washing machine. This is possible because the filter removes a high proportion of the debris from the effluent and is therefore very clean. A unit that is integrated into a washing machine could provide this functionality too.

The separator unit could be integrated into a washing machine and used to replace the conventional filter that is used to prevent debris from reaching and damaging the washing machine pump. Furthermore, by replacing an existing filter with the advanced filtering technology disclosed herein, a different washing machine pump could be used altogether, one that operates at a higher efficiency.

A separator may be provided where the inlet feeds the interior of the sieve structure and the outlet collects filtered effluent from the outside of the sieve structure.

The separator housing may be opened to empty the trap when the effluent has been drained.

An opening at the top of the sieve structure may be provided to avoid air locks.

An air inlet may be provided at the inlet of the separator to avoid syphoning all of the waste water out of a washing machine.

As an alternative to regenerating the pressure of the separator unit, a disposable cartridge may be provided. The part of the separator that contains the filtering element, i.e. the sieve structure, could be provided as a cartridge, that is removed and disposed of and replaced with a new one. Alternatively, the cartridge could be sent for cleaning and then re-used.

Wastewater expelled from textile factories is contaminated with microfibres and it is not guaranteed it will be filtered at municipal facilities. When these facilities exist, they may remove up to 98% of microplastics, however what escapes still equates to millions of microfibres every day. Microfibres removed from water may then be passed to the environment as "sewage sludge", spread on agricultural land as fertiliser. Ultimately microfibres are passed as pollutants into the natural environment - they need to be stopped at source.

Wet-processing factories currently operate in a linear system, whereby microfibre resources are expelled as pollutants from the technical process into the biological environment. Use of the separator system described herein closes the loop into a continued cycle to retain the value of the microfibres within the technical process and stop damage to the biological environment.

An embodiment of the separator system can be retrofitted onto the existing wastewater outlet of wet-processing textile factories to enable microfibre capture at source before pollution of the natural environment can occur.

The separator system can be used to filter microplastics and other micropollutants from environmental drainage systems, such as roadside gullies. A lot of microplastics in the environment break down from larger items of plastic such as car tyres, road surfaces and road markings. After synthetic textiles, tyres are the largest source of microplastics and contain harmful materials such as mineral oils.

Catalytic converters are fitted on most cars and contain highly valuable materials such as platinum, palladium, copper and zinc. During use, small amounts of these metals are lost from cars and fragments are deposited on the road surface. While metal concentrations vary geographically, collection and recycling of these materials not only reduces environmental pollution but can also be a revenue stream in a circular economy.

A larger-scale embodiment of the invention can be applied to the treatment of effluent in Wastewater Treatment Plants. For example, the chamber of the separator could be 1 meter in diameter or 2 meters or greater.

Typical sewage networks are built along one of two designs:
i) Combined sewers. These collect surface water and sewage together, meaning all waste 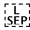 water passes through a Wastewater Treatment Plant (WWTP). During heavy rainfall, it is common for sewers to overflow, releasing untreated sewage and pollution into waterbodies. 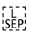
ii) Separate sewers. These discharge surface water directly into waterbodies.

In both systems, roadside runoff, i.e. surface water from the roads, is released into the environment.

Most roadside gullies have drains located at regular points and these drains have a sediment "pot", which lets heavy materials like gravel and sand settle to prevent blockage. These hold some micropollutants, but the majority of microplastics and valuable metals are too small and are not retained.

An embodiment of the separation system of the present invention can be retrofitted as an insert into the sediment pot of a drain to filter micropollutants at source. It is designed to fit existing gullies and to be emptied using a mobile vacuum pump.

In another embodiment the system can be used as part of a filtration system for maritime waste disposal. At sea shipping vessels dump wastewater contaminated from activities on the ship, which include microplastic from various sources. The filter system can be applied to filter this effluent prior to disposal and thus combat this pollution source.

## Claims

1. A separator suitable for separating solid material from a fluid, the separator comprising:
a chamber (601) with an inlet (602) and an outlet (605),
a sieve structure (603) forming a permeable barrier between the inlet and the outlet to filter the fluid, the sieve structure thus having an inlet side for unfiltered fluid and an outlet side for filtered fluid, wherein the sieve structure is coaxial within the chamber;
the separator further comprising a filter pressure regeneration apparatus for dislodging filtered material from the sieve structure,
wherein the filter pressure regeneration apparatus comprises a conduit (1208) and a nozzle assembly (1209) having at least one cleaning nozzle (701) for directing cleaning fluid towards the outlet side of the sieve structure to dislodge filtered material from the inlet side of the sieve structure,
wherein the chamber includes a channel formed of the chamber wall and the sieve structure and wherein the inlet is located at an end of the channel such that in use the fluid flows through the channel and the material dislodged by cleaning fluid from the cleaning nozzle is swept towards the other end of the channel away from the inlet by the movement of the fluid,
**characterised in that** the inlet is arranged to direct fluid tangentially into the chamber onto the sieve structure and a wall (604) is provided to one side of the inlet such that the fluid is guided circumferentially around the sieve structure through the channel such that filtered material dislodged by the cleaning fluid from the cleaning nozzle is swept around the chamber by the flow of the fluid and accumulates on the side of the wall away from the inlet.

2. The separator of claim 1, wherein a trap is provided comprising an opening in a base of the channel to a sub-chamber, where the accumulating filtered material can be collected.

3. The separator of any preceding claims, wherein the nozzle assembly comprises a plurality of cleaning nozzles that are rotatable around the central axis of the sieve structure.

4. The separator of any preceding claims, wherein the cleaning nozzles are arranged opposite to each other and mounted on a central feed tube.

5. The separator of any preceding claim when dependent on claim 3, wherein the nozzle assembly is rotated by a motor.

6. The separator of any preceding claim when dependent on claim 3, wherein the nozzle assembly is rotated by propulsion nozzles arranged to direct a stream of fluid having a vector that is tangential to the circumference of the sieve structure.

7. The separator of any preceding claim, wherein the cleaning nozzles are arranged to direct cleaning fluid perpendicularly against the sieve structure.

8. The separator of any preceding claim, having a pump in fluid communication with the outlet of the chamber.

9. The separator of any preceding claim, wherein the pump is a water pump arranged to drain the separator.

10. The separator of claim 9, wherein the pump is arranged to recirculate the filtered fluid to the conduit of the filter pressure regeneration apparatus.

11. The separator of any preceding claim, wherein a sensor is provided, and wherein the filter pressure regeneration apparatus is arranged to be activated in accordance with an output from the sensor.

12. The separator of any preceding claim, wherein a bypass conduit is provided between the inlet and the outlet to provide an alternative route for fluid in the event that the flow of fluid is impeded.

13. A washing machine with a separator as claimed in claims 1 to 12.

14. A method of operating a separator as claimed in claims 1 to 12, comprising the steps of:
filtering fluid through the sieve structure,
cleaning the filtered side of the sieve structure with a jet or jets of cleaning fluid from a nozzle or nozzles to clean accumulated debris from the unfiltered side of the sieve structure and regenerate the pressure consumption of the separator.

15. The method of claim 14 including the further step of sweeping the nozzle or nozzles across the outlet side of the sieve structure.

## Patentansprüche

1. Trenneinrichtung, die zum Trennen von Feststoffen aus einer Flüssigkeit geeignet ist, wobei die Trenneinrichtung Folgendes umfasst:
eine Kammer (601) mit einem Einlass (602) und einem Auslass (605),
eine Siebstruktur (603), die eine durchlässige Barriere zwischen dem Einlass und dem Auslass bildet, um die Flüssigkeit zu filtern, wobei die Siebstruktur somit eine Einlassseite für ungefilterte Flüssigkeit und eine Auslassseite für gefilterte Flüssigkeit aufweist, wobei sich die Siebstruktur koaxial innerhalb der Kammer befindet;
wobei die Trenneinrichtung ferner eine Filterdruckregenerationsvorrichtung zum Lösen von gefiltertem Material aus der Siebstruktur umfasst,
wobei die Filterdruckregenerationsvorrichtung eine Leitung (1208) und eine Düsenanordnung (1209) mit mindestens einer Reinigungsdüse (701) zum Lenken von Reinigungsflüssigkeit auf die Auslassseite der Siebstruktur umfasst, um gefiltertes Material von der Einlassseite der Siebstruktur zu lösen,
wobei die Kammer einen Kanal enthält, der aus der Kammerwand und der Siebstruktur gebildet ist, und wobei sich der Einlass an einem Ende des Kanals befindet, sodass bei Gebrauch die Flüssigkeit durch den Kanal fließt und das durch Reinigungsflüssigkeit aus der Reinigungsdüse gelöste Material durch die Bewegung der Flüssigkeit zu dem anderen Ende des Kanals von dem Einlass weg geschwemmt wird,
**dadurch gekennzeichnet, dass** der Einlass so angeordnet ist, dass Flüssigkeit tangential in die Kammer auf die Siebstruktur gelenkt wird, und dass auf einer Seite des Einlasses eine Wand (604) bereitgestellt ist, sodass die Flüssigkeit in Umfangsrichtung um die Siebstruktur durch den Kanal geführt wird, sodass durch die Reinigungsflüssigkeit aus der Reinigungsdüse gelöstes gefiltertes Material durch den Fluss der Flüssigkeit um die Kammer geschwemmt wird und sich auf der vom Einlass abgewandten Seite der Wand anhäuft.

2. Trenneinrichtung nach Anspruch 1, wobei eine Auffangeinrichtung bereitgestellt ist, die in einem Boden des Kanals eine Öffnung zu einer Unterkammer umfasst, in der das sich anhäufende gefilterte Material gesammelt werden kann.

3. Trenneinrichtung nach einem der vorhergehenden Ansprüche, wobei die Düsenanordnung eine Vielzahl von Reinigungsdüsen umfasst, die um die Mittelachse der Siebstruktur drehbar sind.

4. Trenneinrichtung nach einem der vorhergehenden Ansprüche, wobei die Reinigungsdüsen einander gegenüberliegend angeordnet und an einem zentralen Zulaufrohr montiert sind.

5. Trenneinrichtung nach einem der vorhergehenden Ansprüche, sofern dieser von Anspruch 3 abhängig ist, wobei die Düsenanordnung durch einen Motor gedreht wird.

6. Trenneinrichtung nach einem der vorhergehenden Ansprüche, sofern dieser von Anspruch 3 abhängig ist, wobei die Düsenanordnung durch Antriebsdüsen gedreht wird, die so angeordnet sind, dass sie einen Flüssigkeitsstrom mit einem Vektor lenken, der tangential zum Umfang der Siebstruktur verläuft.

7. Trenneinrichtung nach einem vorhergehenden Anspruch, wobei die Reinigungsdüsen so angeordnet sind, dass sie Reinigungsflüssigkeit senkrecht gegen die Siebstruktur lenken.

8. Trenneinrichtung nach einem vorhergehenden Anspruch, eine Pumpe in Flüssigkeitsverbindung mit dem Auslass der Kammer aufweisend.

9. Trenneinrichtung nach einem vorhergehenden Anspruch, wobei die Pumpe eine Wasserpumpe ist, die zum Entleeren der Trenneinrichtung angeordnet ist.

10. Trenneinrichtung nach Anspruch 9, wobei die Pumpe so angeordnet ist, dass sie die gefilterte Flüssigkeit zur Leitung der Filterdruckregenerationsvorrichtung zurückführt.

11. Trenneinrichtung nach einem vorhergehenden Anspruch, wobei ein Sensor bereitgestellt ist, und
wobei die Filterdruckregenerationsvorrichtung so angeordnet ist, dass sie entsprechend einer Ausgabe vom Sensor aktiviert wird.

12. Trenneinrichtung nach einem vorhergehenden Anspruch, wobei zwischen dem Einlass und dem Auslass eine Umgehungsleitung bereitgestellt ist, um für den Fall, dass der Flüssigkeitsfluss behindert wird, einen alternativen Flüssigkeitsweg bereitzustellen.

13. Waschmaschine mit einer Trenneinrichtung nach den Ansprüchen 1 bis 12.

14. Verfahren zum Betreiben einer Trenneinrichtung nach den Ansprüchen 1 bis 12, umfassend die folgenden Schritte:
Filtern der Flüssigkeit durch die Siebstruktur,
Reinigen der gefilterten Seite der Siebstruktur mit einem Strahl oder Strahlen einer Reinigungsflüssigkeit aus einer Düse oder Düsen, um angehäuften Schmutz von der ungefilterten Seite der Siebstruktur zu entfernen und den Druckverbrauch der Trenneinrichtung zu regenerieren.

15. Verfahren nach Anspruch 14, den weiteren Schritt des Schwenkens der Düse oder Düsen über die Auslassseite der Siebstruktur enthaltend.

## Revendications

1. Séparateur adapté pour séparer un matériau solide d'un fluide, le séparateur comprenant :
une chambre (601) avec une entrée (602) et une sortie (605),
une structure de tamis (603) formant une barrière perméable entre l'entrée et la sortie pour filtrer le fluide, la structure de tamis présentant ainsi un côté entrée pour du fluide non filtré et un côté sortie pour du fluide filtré, dans lequel la structure de tamis est coaxiale au sein de la chambre ;
le séparateur comprenant en outre un appareil de régénération de pression de filtre destiné à déloger un matériau filtré de la structure de tamis,
dans lequel l'appareil de régénération de pression de filtre comprend un conduit (1208) et un ensemble buse (1209) présentant au moins une buse de nettoyage (701) destiné à diriger du fluide de nettoyage vers le côté sortie de la structure de tamis pour déloger un matériau filtré du côté entrée de la structure de tamis,
dans lequel la chambre comporte un canal formé de la paroi de chambre et de la structure de tamis et dans lequel l'entrée est située au niveau d'une extrémité du canal de sorte que, lors de l'utilisation, le fluide s'écoule à travers le canal et le matériau délogé par du fluide de nettoyage de la buse de nettoyage est balayé vers l'autre extrémité du canal à l'écart de l'entrée par le mouvement du fluide,
**caractérisé en ce que** l'entrée est agencée pour diriger du fluide tangentiellement dans la chambre sur la structure de tamis et une paroi (604) est ménagée à un côté de l'entrée de sorte que le fluide est guidé circonférentiellement autour de la structure de tamis à travers le canal de sorte qu'un matériau filtré délogé par le fluide de nettoyage de la buse de nettoyage est balayé autour de la chambre par l'écoulement du fluide et s'accumule sur le côté de la paroi à l'écart de l'entrée.

2. Séparateur de la revendication 1, dans lequel un piège est ménagé comprenant une ouverture dans une base du canal vers une sous-chambre, où le matériau filtré accumulé peut être collecté.

3. Séparateur de l'une quelconque des revendications précédentes, dans lequel l'ensemble buse comprend une pluralité de buses de nettoyage qui peuvent être entraînées en rotation autour de l'axe central de la structure de tamis.

4. Séparateur de l'une quelconque des revendications précédentes, dans lequel les buses de nettoyage sont agencées en face les unes des autres et montées sur un tube d'alimentation central.

5. Séparateur d'une quelconque revendication précédente lorsqu'elle dépend de la revendication 3, dans lequel l'ensemble buse est entraîné en rotation par un moteur.

6. Séparateur d'une quelconque revendication précédente lorsqu'elle dépend de la revendication 3, dans lequel l'ensemble buse est entraîné en rotation par des buses de propulsion agencées pour diriger un flux de fluide présentant un vecteur qui est tangentiel à la circonférence de la structure de tamis.

7. Séparateur d'une quelconque revendication précédente, dans lequel les buses de nettoyage sont agencées pour diriger du fluide de nettoyage perpendiculairement contre la structure de tamis.

8. Séparateur d'une quelconque revendication précédente présentant une pompe en communication fluidique avec la sortie de la chambre.

9. Séparateur d'une quelconque revendication précédente, dans lequel la pompe est une pompe à eau agencée pour vidanger le séparateur.

10. Séparateur de la revendication 9, dans lequel la pompe est agencée pour faire recirculer le fluide filtré vers le conduit de l'appareil de régénération de pression de filtre.

11. Séparateur d'une quelconque revendication précédente, dans lequel un capteur est ménagé, et
dans lequel l'appareil de régénération de pression de filtre est agencé pour être activé en fonction d'une sortie du capteur.

12. Séparateur d'une quelconque revendication précédente, dans lequel un conduit de dérivation est ménagé entre l'entrée et la sortie pour fournir un itinéraire alternatif pour du fluide dans le cas où l'écoulement de fluide est entravé.

13. Machine à laver avec un séparateur selon les revendications 1 à 12.

14. Procédé de fonctionnement d'un séparateur selon les revendications 1 à 12, comprenant les étapes de :
filtrage de fluide à travers la structure du tamis,
nettoyage du côté filtré de la structure du tamis avec un ou plusieurs jets de fluide de nettoyage d'une buse ou de plusieurs buses pour nettoyer des débris accumulés du côté non filtré de la structure du tamis et régénérer la consommation de pression du séparateur.

15. Procédé de la revendication 14 comportant l'étape supplémentaire de balayage de la buse ou des buses en travers du côté sortie de la structure du tamis.
